# EUROPÄISCHE PATENTSCHRIFT

(11) **EP 0 642 972 B1**
(45) Veröffentlichungstag und Bekanntmachung des Hinweises auf die Patenterteilung: **05.08.1998**
(21) Anmeldenummer: 94109457.5
(22) Anmeldetag: 18.06.1994
(51) Int. Cl.: B62M 9/10

(54) **Kettenschaltung, insbesondere für Fahrräder**
Chain-shifting gear-change, in particular for a bicycle
Changement de vitesse à dérailleur de chaîne, spécialement pour bicyclette

(30) Priorität: 13.09.1993 DE 4330989
(43) Veröffentlichungstag der Anmeldung: 15.03.1995
(73) Patentinhaber: SRAM Deutschland GmbH, 97424 Schweinfurt (DE)
(72) Erfinder: Neuer, Andreas, Dr., D-97422 Schweinfurt (DE); Bodmer, Jörg, D-97464 Niederwerrn (DE)

(56) Entgegenhaltungen:
- EP-A- 0 313 345
- EP-A- 0 474 139
- FR-A- 2 469 624

## Beschreibung

Die Erfindung betrifft eine Kettenschaltung, insbesondere für Fahrräder, umfassend eine treibende Kettenradeinheit und eine angetriebene Kettenradeinheit sowie eine diese beiden Kettenradeinheiten miteinander verbindende Kette,
wobei mindestens eine der Kettenradeinheiten als Mehrkettenradeinheit mit mindestens zwei Kettenrädern, nämlich einem größeren und einem kleineren Kettenrad, ausgebildet ist,
wobei weiter die beiden Kettenräder der Mehrkettenradeinheit je eine Vielzahl von Zähnen und eine entsprechende Vielzahl von zwischen jeweils einem Zahnpaar gebildeten Zahnlücken aufweist,
wobei weiter im allgemeinen die Zahnlücken als Einfachzahnlücken zur Aufnahme jeweils eines Kettengelenks ausgebildet sind,
wobei weiter die Kette von aufeinanderfolgenden Kettengelenken und von inneren und äußeren Laschenpaaren in abwechselnder Reihenfolge zwischen den Kettengelenken gebildet ist,
wobei weiter zum Umlegen der Kette zwischen den beiden Kettenrädern der Mehrkettenradeinheit eine Umlegeeinrichtung in einem Einlaufbereich vorgesehen ist, in welchem die Kette bei normaler Umlaufrichtung der Kette und der Kettenräder in die Mehrkettenradeinheit einläuft und diese Umlegeeinrichtung dazu ausgebildet ist, um der Kette Bewegungen in einer zur Achse der Mehrkettenradeinheit parallelen Richtung zu erteilen,
wobei weiter beim Umlegen der Kette zwischen den Kettenrädern der Mehrkettenradeinheit sich eine Kettenübergangsstrecke zwischen einem altbesetzten und einem neubesetzten der beiden Kettenräder ausbildet, welche Kettenübergangsstrecke den Umlaufbereich der Mehrkettenradeinheit vom Ketteneinlaufbereich bis zu einem Kettenablaufbereich der Mehrkettenradeinheit durchläuft,
wobei weiter die Kettenübergangsstrecke sich entgegen der normalen Umlaufrichtung der Mehrkettenradeinheit erstreckt von einem Kettengelenk, das als letztes Kettengelenk zwischen zwei Letztzähne eines Letztzähnepaars des altbesetzten Kettenrads eingreift, zu einem Kettengelenk, das als erstes zwischen zwei Erstzähne eines Erstzähnepaars des neubesetzten Kettenrads eingreift
und wobei in mindestens einem der Kettenumlegung in der Umlegerichtung vom kleineren Kettenrad zum größeren Kettenrad entsprechenden Kettenübergangumfangsbereich der Mehrkettenradeinheit an den Kettenrädern Gestaltungsmaßnahmen getroffen sind, um in diesem Kettenübergangumfangsbereich das Umlegen der Kette zwischen den beiden Kettenrädern zumindest in der Umlegerichtung vom kleineren Kettenrad zum größeren Kettenrad zu erleichtern und den Verlauf der entsprechenden Kettenübergangsstrecke festzulegen.

Aus der DE-C2-28 37 270 ist eine Fahrradschaltung mit einer Kette und einem Kettenradsatz bekannt, der mindestens ein kleineres Kettenrad und mindestens ein koaxial sowie mit Abstand zu diesem angeordnetes größeres Kettenrad aufweist. Das größere Kettenrad trägt mindestens zwei Zähne, die zum erleichterten Eingreifen in die Kette gestaltet sind. Beim Schaltvorgang soll die Kette mit jeweils einem Kettenbolzen zum einen zwischen zwei Zähne eines Zähnepaars des größeren und zum anderen mit jeweils einem Kettenbolzen zwischen zwei Zähne eines Zähnepaars des kleineren Kettenrads eingreifen und sich hierbei, d.h. in ihrem Verlauf zwischen diesen beiden Kettenbolzen tangential zum kleineren Kettenrad erstrecken und den Abstand zwischen den Zähnepaaren der beiden Kettenräder überbrücken. Der Abstand von dem Mittelpunkt des einen Paars von Zähnen, zwischen die ein Kettenbolzen eingreift, zu dem Mittelpunkt des anderen Paars von Zähnen, zwischen die ein Kettenbolzen eingreift, soll dabei ein ganzzahliges Vielfaches der Kettenteilung betragen und die beiden Zähne des Zähnepaars des größeren Kettenrads sollen so gestaltet oder angeordnet sein, daß ihr Eingriff mit der Kette erleichtert ist.

Bei der bekannten Ausführungsform sind auf dem ganzen Umfang des größeren Kettenrads Zähne vorhanden. Die Zähne sind teilweise gekürzt, um den Kettenübergang zu erleichtern. Es sind auf dem größeren Kettenrad zwei Fangzähne vorhanden, von denen der eine dazu bestimmt ist, zwischen zwei Innenlaschen einzugreifen und der andere dazu bestimmt ist, zwischen zwei Außenlaschen einzugreifen. Beide Fangzähne haben Eingriffsflanken für den Eingriff mit den Kettenrollen. Beide Fangzähne sind durch Verschränkung zum kleineren Kettenrad hin geschwächt. Wegen dieser im Hinblick auf den Kettenübergang vom kleineren zum größeren Kettenrad hin vorgesehenen Schwächung besteht kaum eine Möglichkeit, weitere Gestaltungsmaßnahmen an diesen Zähnen zu treffen, um auch für den Übergang vom größeren Kettenrad auf das kleinere Kettenrad eine Erleichterung zu schaffen.

Aus der FR-A-2 469 624 ist eine Fahrradschaltung mit einer Kette und einem Kettenradsatz bekannt. Der Kettenradsatz weist ein kleineres Kettenrad und ein koaxial sowie mit Abstand zu diesem angeordnetes größeres Kettenrad auf. Bei beiden Kettenrädern ist wenigstens über einen mehreren Kettenlaschenpaaren der Kette entsprechenden Umfangsbereich jeder zweite Zahn weggelassen, so daß in diesem Umfangsbereich nur jedes zweite Kettenlaschenpaar der um das betreffende Kettenrad umlaufenden Kette einen Zahn zwischen sich aufnimmt. Die Zähne der Kettenräder weichen dabei von normalen, symmetrisch gestalteten Zähnen insofern ab, als daß die durch die Kette unbelasteten Flanken in Richtung zu den belasteten Flanken versetzt sind, damit sich größere Zwischenräume zwischen in Umfangsrichtung aufeinander folgenden Zähnen ergeben.

Weitere Gestaltungsmaßnahmen sind am größeren Kettenrad vorgesehen, dessen Zähne auf der vom kleineren Kettenrad abliegenden Seite Abschrägungen aufweisen und das im genannten Umfangsbereich im Bereich der Zahnlücken mit taschenförmigen, zum kleineren Kettenrad und in radialer Richtung hin offenen Ausnehmungen versehen ist. Durch die genannten Maßnahmen soll beim Umlegen der Kette zwischen den Kettenrädern eine hohe Querbeweglichkeit der Kette verbunden mit einem kurzen Kettenübergangsbereich erreicht werden.

Der Erfindung liegt die Aufgabe zugrunde, eine weitere Erleichterung des Übergangs, insbesondere von dem kleineren Kettenrad auf das größere Kettenrad ggf. aber auch von dem größeren Kettenrad auf das kleinere Kettenrad, zu ermöglichen. Insbesondere soll erreicht werden, daß dann, wenn unter Last ein Übergang von dem kleineren Kettenrad auf das größere Kettenrad bewerkstelligt werden soll, dieser Übergang geräuschlos und stoßfrei erfolgt und die Kette möglichst rasch in Eingriff mit dem neugewählten Kettenrad tritt.

Zur Lösung dieser Aufgabe wird erfindungsgemäß die Kombination der folgenden Merkmale vorgeschlagen:
a) in dem dem Umlegen von dem kleineren Kettenrad auf das größere Kettenrad entsprechende Kettenübergangumfangsbereich ist an dem größeren Kettenrad unter Bildung einer zwischen Einfachzahnlücken angeordneten Doppelzahnlücke ein Zahn ausgespart, welcher in der normalen Umlaufrichtung dem vorlaufenden Erstzahn des Erstzähnepaars des größeren Kettenrads vorangeht;
b) an dem großen Kettenrad ist auf seiner dem kleineren Kettenrad zugekehrten Seitenfläche im Basisbereich eines Zahns, welcher der Doppelzahnlücke in der normalen Umlaufrichtung vorausgeht und gewünschtenfalls noch in dem vorlaufenden Endbereich der Doppelzahnlücke eine Laschenauflagerampe ausgebildet, welche in normaler Umlaufrichtung dem nachlaufenden Letztzahn des Letztzähnepaars des kleineren Kettenrads nachläuft;
c) durch die Laschenauflagerampe und einen Boden der Doppelzahnlücke ist ein - in axialer Richtung betrachtet - nach radial außen konvex gekrümmter oder geknickter Verlauf der Kettenübergangsstrecke innerhalb des Kettenübergangumfangsbereichs zwischen dem Erstzähnepaar des größeren Kettenrads und dem Letztzähnepaar des kleineren Kettenrads erzwungen, wobei die gekrümmte Kettenübergangsstrecke in die Zahnlücke zwischen den beiden Letztzähnen des Letztzähnepaars des kleineren Kettenrads einmündet;
d) der in normaler Umlaufrichtung vorauslaufende Erstzahn des Erstzähnepaars des größeren Kettenrads ist für den Eingriff sowohl zwischen die Laschen eines Innenlaschenpaars als auch zwischen die Laschen eines Außenlaschenpaars ausgebildet.

Es hat sich gezeigt, daß man bei der erfindungsgemäßen Ausgestaltung ein hervorragendes Schaltverhalten unter Last erhält. Weiter hat sich gezeigt, daß die erfindungsgemäße Kettenschaltung eine hohe Verschleißbeständigkeit sowohl kettenseitig als auch kettenradseitig aufweist. Dieses günstige Verschleißverhalten dürfte insbesondere auf das Vorhandensein der Doppelzahnlücke zurückzuführen sein, da - selbst dann, wenn in der Doppelzahnlücke des größeren Kettenrads im Hinblick auf einen Rückwärtslauf der Kette ggf. ein die Seitenlage der Kette sichernder, als Zahn unwirksamer Sporn vorhanden ist - die Schrägstellung der Kette gegenüber ihrer Umlaufebene weniger als bisher zu Verschleißerscheinungen führt, weil der Schrägstellwinkel gegenüber der Umlaufebene reduziert ist. Dank der durch die Doppelzahnlücke des größeren Kettenrads gebildeten Gasse für den Kettenübergang beim Schalten von dem kleineren Kettenrad auf das größere Kettenrad bedarf es keiner Kürzung der am Übergang beteiligten Zähne des größeren Kettenrads. Dadurch wird das Drehmomentübertragungsverhalten an den Eingriffstellen zwischen Kettengelenken und Zähnen sowohl während des Schaltvorgangs als auch im normalen Betrieb verbessert, was wiederum positive Auswirkungen auf das Verschleißverhalten ergibt. Durch die Bereitstellung der Gasse in Form der Doppelzahnlücke des größeren Kettenrads wird erreicht, daß als Erstzahn des neu mit der Kette zu besetzenden größeren Kettenrads immer ein und derselbe Zahn zwischen ein Kettenlaschenpaar, gleichgültig, ob Innenlaschenpaar oder Außenlaschenpaar, wirksam wird. Es bedarf also allenfalls einer Bearbeitung dieses einen Zahns im Hinblick auf das Umlegen der Kette von dem kleineren Kettenrad auf das größere Kettenrad. Wenn infolgedessen eine diesem Zwecke dienende Bearbeitung weiterer Zähne entfällt, so stehen weitere Zähne zu einer das Umlegen der Kette vom größeren Kettenrad auf das kleinere Kettenrad begünstigenden Bearbeitung zur Verfügung, ohne daß die Gefahr besteht, daß durch Doppelbearbeitung im Hinlbick auf die beiden Schaltrichtungen eine übermäßige verschleiß- und abbruchgefährdende Bearbeitung erforderlich ist.

Es hat sich auch gezeigt, daß die erfindungsgemäße Gestaltung relativ unempfindlich bezüglich Störungserscheinungen ist, die dann auftreten, wenn bei Nutzung eines Überschaltwegs die Kette im Falle des Umlegens von dem kleineren Kettenrad auf das größere Kettenrad "zu weit" in Richtung auf das größere Kettenrad hin bewegt wird. Weiter hat sich gezeigt, daß bei der erfindungsgemäßen Kettenschaltung die Gefahr eines Absprengens einzelner Kettenlaschen verringert ist. Diese Gefahr ist bei vorbekannten Lösungen insbesondere immer dann aufgetreten, wenn in der Übergangsstrecke infolge deren Schrägstellung gegenüber ihrer Umlaufebene zwei Innenlaschen durch einen zwischen sie eingefangenen Zahn im Sinne einer Vergrößerung ihres Abstands belastet wurden und demzufolge die an ihnen anliegenden dem Kettenbolzenende nächstgelegenen Außenlaschen vom Kettenbolzen abgesprengt wurden.

Durch die bei der erfindungsgemäßen Ausgestaltung vorgesehene Laschenauflagerampe kann das Ansteigen der Kette in radialer Richtung relativ zu dem neu zu besetzenden größeren Kettenrad wesentlich erleichtert werden. Dies mag ein weiterer Grund dafür sein, daß eine Kürzung von Zähnen mit der Folge der Eingriffsverschlechterung nicht erforderlich ist. Durch diese Laschenauflagerampe wird auch der konvex gekrümmte Verlauf der Kettenübergangsstrecke begünstigt. Dieser gekrümmte Verlauf trägt zu einer Verlängerung der Kettenübergangsstrecke bei im Vergleich zu einem gedachten geradlinigen Verlauf mit der Folge, daß die Belastung der Kette infolge Schrägstellung gegenüber ihrer Umlaufebene weiter verringert wird.

Wenn bei der Darstellung der Erfindung von Kettenrädern gesprochen wird, so sind sowohl die Kettenräder eines der Hinterradnabe eines Fahrrads zugekehrten Kettenradsatzes als auch die Kettenblätter eines Tretkurbelkettenradsatzes gemeint. Im Rahmen der vorliegenden Beschreibung wird als Beispiel ein Hinterradkettenradsatz behandelt. Dieses Beispiel läßt sich prinzipiell auch an den Kettenblättern eines Tretkurbelkettenradsatzes verwirklichen, wobei allerdings im Hinblick darauf gewisse Änderungsmaßnahmen notwendig sein mögen, daß im Falle eines Hinterradkettenradsatzes das unbelastete Rücklauftrum der Kette in den Kettenradsatz einläuft, während im Falle eines Tretkurbelkettenradsatzes die Einlaufstelle dort liegt, wo das bei normaler Drehrichtung belastete Zugtrum der Kette in den Kettenradsatz einläuft.

Ferner wird vorgeschlagen, daß an dem kleineren Kettenrad ein auf den nachlaufenden Letztzahn des Letztzähnepaars folgender Zahn unter Bildung einer Mehrfachzahnlücke des kleineren Kettenrads ausgespart ist.

Die Laschenaufnahmerampe kann von dem radial inneren Rand einer reliefartigen Vertiefung in einer dem kleineren Kettenrad zugekehrten Seitenfläche des größeren Kettenrads gebildet sein. Dabei ist vorgesehen, daß die reliefartige Vertiefung eine in normaler Umlaufrichtung vorauslaufende in bezug auf die Achse der Mehrkettenradeinheit im wesentlichen radial verlaufende Vorlaufkante besitzt, wobei eine dieser Vorlaufkante in axialer Richtung benachbarte Kettenlasche jeweils über diese Vorlaufkante hinwegläuft. Es soll also nicht eine ganze Kettenlasche in die reliefartige Vertiefung eintreten können, sondern es soll durch die Vorlaufkante die Krümmung der Kette gegenüber ihrer Umlaufebene beeinflußt werden. Es ist dabei weiter von Vorteil, daß die reliefartige Vertiefung in einem der normalen Umlaufrichtung entsprechenden Vorlaufbereich vor einem Vorlaufende der Laschenauflagerampe radial einwärts in Richtung auf die Achse der Mehrkettenradeinheit erweitert ist.

Um das Eingreifen des in normaler Umlaufrichtung vorlaufenden Erstzahns des Erstzähnepaars des größeren Kettenrads zwischen zwei Kettenlaschen zu begünstigen, insbesondere zwischen zwei Innenlaschen, kann vorgesehen sein, daß der vorlaufende Erstzahn des Erstzähnepaars des größeren Kettenrads auf seiner von dem kleineren Kettenrad abgelegenen Seitenfläche nach radial auswärts und zum kleineren Kettenrad hin abgeschrägt ist.

Um einen vorzeitigen Eingriff der auf das größere Kettenrad zu bewegten Kette mit Zähnen des größeren Kettenrads zu unterbinden, also sozusagen, um eine Kettenabweisefunktion solcher Zähne zu erreichen, die nicht als Erstzähne beim Schalten auf das größere Kettenrad in die Kette eingreifen sollen, kann man vorsehen, daß zumindest ein Teil derjenigen Zähne des größeren Kettenrads, die nicht identisch sind mit dem vorlaufenden Erstzahn des Erstzähnepaars des größeren Kettenrads auf ihrer dem kleineren Kettenrad zugekehrten Seite nach radial außen und von dem kleineren Kettenrad weg abgeschrägt sind, und zwar mindestens und vorzugsweise in einem radial äußeren Bereich ihrer radialen Höhe.

Um beim Rückwärtslauf der Kette durch Rückwärtstreten der Tretkurbel unter allen Umständen eine Sicherung gegen seitliches Ausweichen des dann entspannten Kettenobertrums in den zum Einlaufbereich werdenden Kettenablaufbereich eines Hinterradkettenradsatzes zu gewährleisten, kann man vorsehen, daß an der Stelle des ausgesparten Zahns der Doppelzahnlücke zumindest des größeren Kettenrads ein Sporn vorgesehen ist, welcher im Fall der axialen Nachbarschaft zu einem Innenlaschenpaar außerhalb des Zwischenraums dieses Innenlaschenpaars liegt, und zwar auf der Außenseite derjenigen Innenlasche, welche dem kleineren Kettenrad ferner ist, und welcher im Fall der axialen Nachbarschaft zu einem Außenlaschenpaar in den Zwischenraum der Laschen dieses Außenlaschenpaars hineinragt. Dieser Sporn ist aber bewußt nicht als ein Zahn ausgebildlet, da er ja im Falle einer solchen Ausbildung die Gassenfunktion der Doppelzahnlücke aufheben würde. Dieser Sporn soll insbesondere in Umfangsrichtung so kurz bemessen sein, daß er keinesfalls in Drehmomentübertragungseingriff mit der Kette tritt. Wenn eine Drehmomentübertragungsfunktion dieses Sporns unterbunden ist, so ist gewährleistet, daß dieser Sporn bei Benutzung der Kettenschaltung stets unbelastet ist. Ist die Belastungsfreiheit dieses Sporns gegenüber Drehmomentübertragung zwischen Kette und Kettenrad gewährleistet, so kann dieser Sporn beliebig schwach sowohl in Umfangsrichtung des Kettenrads als auch in Querrichtung des Kettenrads ausgebildet werden. Die Möglichkeit, diesen Sporn schwach auszubilden, sorgt andererseits wieder dafür, daß er für die Gassenbildung im Bereich der Doppelzahnlücke unschädlich ist, gleichgültig, ob er außenseitig an einer Innenlasche anliegt oder zwischen ein Außenlaschenpaar einragt.

Es hat sich gezeigt, daß bei der soweit beschriebenen Gestaltung der Kettenschaltung durch die Doppelzahnlücke in dem größeren Kettenrad auch eine Schaltpräferenz in diesem Bereich auftritt, wenn die Kette vom größeren Kettenrad auf das kleinere Kettenrad umgelegt werden soll. Diese Schaltpräferenz an einer oder mehreren bestimmten Stellen ist erwünscht, wenn auch das Schalten vom größeren Kettenrad auf das kleinere Kettenrad aus später noch zu erörternden Gründen weniger kritisch ist als das Umlegen der Kette von dem kleineren Kettenrad auf das größere Kettenrad. Zu dieser Schaltpräferenz für die Umschaltung vom größeren Kettenrad auf das kleinere Kettenrad kann neben der Doppelzahnlücke in dem größeren Kettenrad auch die etwa vorhandene Doppelzahnlücke in dem kleineren Kettenrad beitragen. Darüber hinaus können weitere Maßnahmen zur Erleichterung des Kettenumlegens in der Umlegerichtung vom größeren Kettenrad zum kleineren Kettenrad in dem für die Übergangsrichtung vom kleineren Kettenrad zum größeren Kettenrad ausgestalteten Kettenübergangumfangsbereich an Zähnen des größeren Kettenrads vorgesehen sein.

Eine solche Maßnahme besteht darin, daß der nachlaufende Erstzahn des Erstzähnepaars des größeren Kettenrads oder/und der diesem nachlaufenden Erstzahn in normaler Umlaufrichtung folgende Zahn des größeren Kettenrads Abschrägungen auf der jeweiligen dem kleineren Kettenrad zugekehrten Seite besitzen, und zwar so, daß die abgeschrägten Flächen - bei einer Betrachtung in radialer Richtung von radial außen - im Sinne der normalen Umlaufrichtung nach vorn und vom kleineren Kettenrad weg verlaufen. Wenn beide Zähne, also sowohl der nachlaufende Erstzahn des größeren Kettenrads als auch der diesem in normaler Umlaufrichtung nachfolgende Zahn solche Abschrägungen besitzen, so kann eine der Kettenumlegerichtung vom größeren Kettenrad zum kleineren Kettenrad entsprechende Kettenübergangsstrecke bei axialer Nachbarschaftt eines ihr zugehörigen Innenlaschenpaars zu dem nachlaufenden Erstzahn des größeren Kettenrads mit der Außenseite ihrer dem kleineren Kettenrad fernen Innenlasche an der Abschrägung des nachlaufenden Erstzahns des Erstzähnepaars des größeren Kettenrads anliegen, während im Falle der axialen Nachbarschaft eines Außenlaschenpaars der Kettenübergangsstrecke zum nachlaufenden Erstzahn des Erstzähnepaars des größeren Kettenrads dieser Erstzahn zwischen die Außenlaschen dieses Außenlaschenpaars eingreift und dann eine dem kleineren Kettenrad ferne Innenlasche eines dem zuvor genannten Außenlaschenpaar nachfolgenden Innenlaschenpaars an der Abschrägung des auf den nachlaufenden Erstzahn des Erstzähnepaars des größeren Kettenrads nachfolgenden Zahns des größeren Kettenrads anliegt.

Es ist aber auch denkbar, zum Erleichtern des Kettenumlegens von dem größeren Kettenrad auf das kleinere Kettenrad an denjenigen Zähnen des größeren Kettenrads Maßnahmen zu treffen, welche der Doppelzahnlücke in Umlaufrichtung des größeren Kettenrads vorausgehen, insbesondere an demjenigen Zahn des größeren Kettenrads, welcher der Doppelzahnlücke unmittelbar vorausgeht und ggf. auch an demjenigen Zahn, welcher der Doppelzahnlücke des größeren Kettenrads als zweiter vorausläuft. Auf diese Weise kann man bereits im Bereich dieser Zähne mit der Schrägstellung der Kette gegenüber ihrer Umlaufebene beginnen.

Es ist möglich, daß die beiden Kettenräder, d.h. das größere Kettenrad und das kleinere Kettenrad, Teil einer größeren Gruppe von Kettenrädern der Mehrkettenradeinheit sind, wobei dann entweder das bisher als größeres Kettenrad betrachtete Kettenrad das kleinere Kettenrad in bezug auf ein ihm benachbartes noch größeres Kettenrad ist und/oder das bisher als das kleinere Kettenrad betrachtete Kettenrad das größere Kettenrad in bezug auf ein noch kleineres Kettenrad ist und wobei die angegebenen Beziehungen für mindestens einen Teil der jeweils zusammen ein Kettenradpaar bildenden benachbarten Kettenräder gelten. Der weiter oben erwähnte Sporn wird - wenn überhaupt - nur im Bereich der Doppelzahnlücke des größten Kettenrads oder der größten Kettenräder benötigt.

Um nach einem von der Kettenwerfereinrichtung ausgeführten Kettenumlegebefehl möglichst kurzfristig die Umlegung der Kette zwischen zwei benachbarten Kettenrädern herbeizuführen, wird vorgeschlagen, daß einem Kettenradpaar einer Mehrkettenradeinheit eine Mehrzahl von über den Umfang verteilten Kettenübergangsumfangsbereichen zugeordnet sind.

Die erfindungsgemäß vorgesehene Bildung einer Doppelzahnlücke zumindest in dem größeren Kettenrad führt zu einem veränderten Lauf des aus Kette und Kettenradsätzen gebildeten Systems; dies gilt insbesondere dann, wenn man - was nicht grundsätzlich ausgeschlossen sein soll - daran denkt, die Doppelzahnlücke einfach dadurch zu gewinnen, daß man an einem herkömmlichen Kettenrad mit konstanter Zahnteilung über seinen gesamten Umfang einen Zahn einfach wegläßt oder "herausfeilt". Ein für den Benutzer angenehmeres Verhalten kann dadurch erzielt werden, daß bei Aussparung mindestens eines Zahns zwischen zwei aufeinanderfolgenden Zähnen eines Kettenrads und dadurch veranlaßter Bildung einer Mehrfachzahnlücke, insbesondere Doppelzahnlücke die Zahnlückenkontur dieser Mehrfachzahnlücke und die Zahnlückenkontur einer auf diese Mehrfachzahnlücke unmittelbar nachfolgenden weiteren Zahnlücke derart aufeinander abgestimmt sind, daß bei Einliegen einer entsprechenden Zahl von Kettengelenken in diesen Zahnlücken deren Gelenkachsen wenigstens annähernd auf einer gemeinsamen Verbindungsgeraden liegen, wobei das in der Mehrfachzahnlücke vorlaufende Kettengelenk und das in der nachfolgenden Zahnlücke aufgenommene Kettengelenk mindestens beim Auslauf ins Zugtrum gemeinsam an der Nachlaufflanke des ihnen jeweils vorauslaufenden Zahns anteilmäßig drehmomentübertragend beteiligt sind.

Allgemein gilt dann, daß die Mittelpunkte der Zahnlücken des Kettenrads ein unregelmäßiges Polygon bilden, wobei die jeweils auf einer gemeinsamen Verbindungslinie liegenden Gelenkachsen jeweils größere Polygonseiten bilden.

Die beiliegenden Figuren erläutern die Erfindung anhand eines Ausführungsbeispiels; es stellen dar:
- Figur 1: eine Seitenansicht eines Hinterradnabenkettenradsatzes eines Fahrrads mit Kette und Kettenwerfereinrichtung;
- Figur 2: einen Ausschnitt aus Figur 1 in vergrößerter Darstellung beim Übergang der Kette von einem kleineren Kettenrad auf ein größeres Kettenrad;
- Figur 3: eine Ansicht auf den in Figur 2 dargestellten Kettenübergangsbereich von radial außen;
- Figur 4: eine Ansicht entsprechend Figur 2, jedoch bei anderer Zuordnung der inneren und äußeren Kettenlaschenpaare zu den Kettenrädern;
- Figur 5: eine Ansicht von radial außen auf die Kettenübergangsstrecke gemäß Figur 4;
- Figur 6: ein Detail des größeren Kettenrads gemäß Figuren 1-5;
- Figur 7: eine Seitenansicht eines Kettenradsatzes mit einer Kettenübergangsstrecke, die sich beim Schalten von dem größeren Kettenrad auf das kleinere Kettenrad ausbildet;
- Figur 8: eine Ansicht in Pfeilrichtung VIII der Figur 7;
- Figur 9: eine Ansicht entsprechend Figur 8, jedoch bei Veränderung der Zuordnung äußerer und innerer Kettenglieder zu den Kettenrädern;
- Figur 10: das Schema der Zahn- und Zahnlückenverteilung eines Kettenrads, etwa des größeren Kettenrads der Figur 1, und
- Figur 11: den Ablauf der Kette von dem Kettenrad gemäß Figur 10.

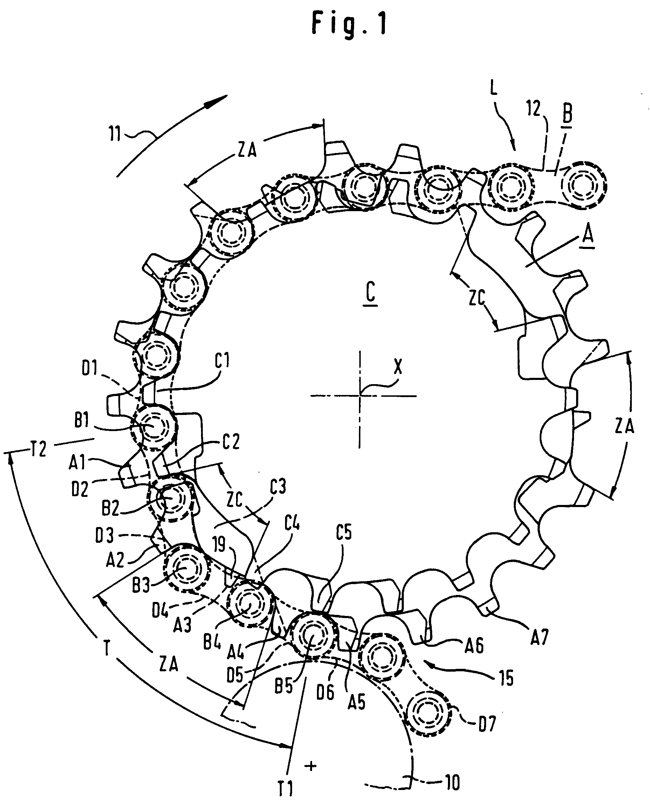

In Figur 1 erkennt man zwei Kettenräder mit der gemeinsamen Drehachse eines Hinterradkettenradsatzes eines Fahrrads, wobei das größere Kettenrad mit A und das kleinere Kettenrad mit C bezeichnet ist. Im Beispielsfall hat das große Kettenrad A 21 Zähne und das kleine Kettenrad C 18 Zähne. Eine Kette, welche den Hinterradkettenradsatz mit einem Tretkurbelkettenradsatz des Fahrrads verbindet, ist mit B bezeichnet. Die Kette B läuft über das Leitrad 10 einer Kettenwerfervorrichtung in den Kettenradsatz A,C ein. Die dem Vorwärtsantrieb entsprechende normale Kettenumfangsrichtung ist durch den Pfeil 11 angedeutet. Bei 12 erkennt man das zum Tretkurbelkettenradsatz tangential weiterlaufende obere Kettentrum; bei 15 ist der Einlauf der Kette C in den Hinterradkettenradsatz dargestellt.

Die Figur 1 stellt den Umschaltvorgang von dem kleineren Kettenrad C auf das größere Kettenrad A dar. Man erkennt in der oberen Hälfte der Figur 1, daß die Kette B noch in Eingriff mit dem kleineren Kettenrad C ist. In der unteren Hälfte der Figur 1 erkennt man, daß ein Teil der Kette B bereits auf dem größeren Kettenrad A aufliegt.

Der Übergang der Kette B von dem kleinen Kettenrad C auf das große Kettenrad A ist durch Bewegung des Leitrads 10 senkrecht zur Zeichenebene nach hinten eingeleitet worden zu einem gegenüber dem Zeitpunkt des Zustands nach Figur 1 früheren Zeitpunkt, zu dem sich der Zahn A1 des großen Kettenrads A noch vor dem Bereich des Leitrads 10 befand. Dabei ist eine Übergangszone der Kette entstanden, die als ganze mit T bezeichnet ist, deren nachlaufendes Ende mit T1 und deren vorlaufendes Ende mit T2 bezeichnet ist. Diese Übergangszone wandert bei Weiterdrehung des Kettenradsatzes A,C in der Drehrichtung 11 weiter. Wenn das nachlaufende Ende T1 der Übergangszone T in den Ablaufbereich L gemäß Figur 1 gerät, in welchem die Kette B sich vom Kettenradsatz löst, um dem tretkurbelseitigen Kettenradsatz zuzulaufen, dann ist der Schaltvorgang von dem kleinen Kettenrad C auf das große Kettenrad A beendet.

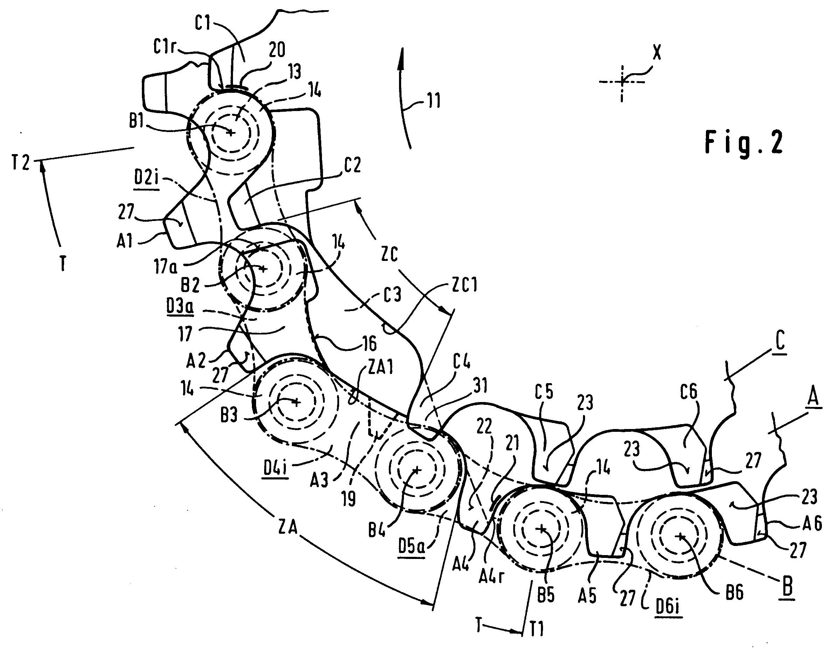

Der Schaltvorgang vom kleinen Kettenradsatz C auf den großen Kettenradsatz A läßt sich durch Betrachtung der Übergangszone T erklären, welche in Figur 2 vergrößert dargestellt ist.

In Figur 2, welche den Übergangsbereich T vergrößert darstellt, erkennt man einen Kettengelenkpunkt B1. Dieser Kettengelenkpunkt B1 ist in üblicher Weise durch einen Bolzen 13 und eine Kettenrolle 14 gebildet. Der Kettengelenkpunkt B1 ist derjenige Kettengelenkpunkt, der vor Wirksamwerden der Schaltbewegung des Leitrads 10 noch voll in den Eingriff mit dem kleinen Kettenrad C gelangt und zwar in eine Zahnlücke zwischen den Zähnen C1 und C2 des kleinen Kettenrads C. Der Kettengelenkpunkt B5, der genauso ausgebildet ist wie der Kettengelenkpunkt B1, ist der erste Kettengelenkpunkt, der nach dem Wirksamwerden der Schaltbewegung des Leitrads 10 in vollen Eingriff mit dem großen Kettenrad A gelangt ist und zwar in die Zahnlücke zwischen den beiden Zähnen A4 und A5 des großen Kettenrads A. Das große Kettenrad A weist zwischen den aufeinanderfolgenden Zähnen A2 und A4 eine Zahnfehlstelle auf, die mit A3 bezeichnet ist. An dieser Zahnfehlstelle A3 kann sich ein Sporn befinden, der bei A3 gestrichelt eingezeichnet ist; auf diesen wird später noch eingegangen.

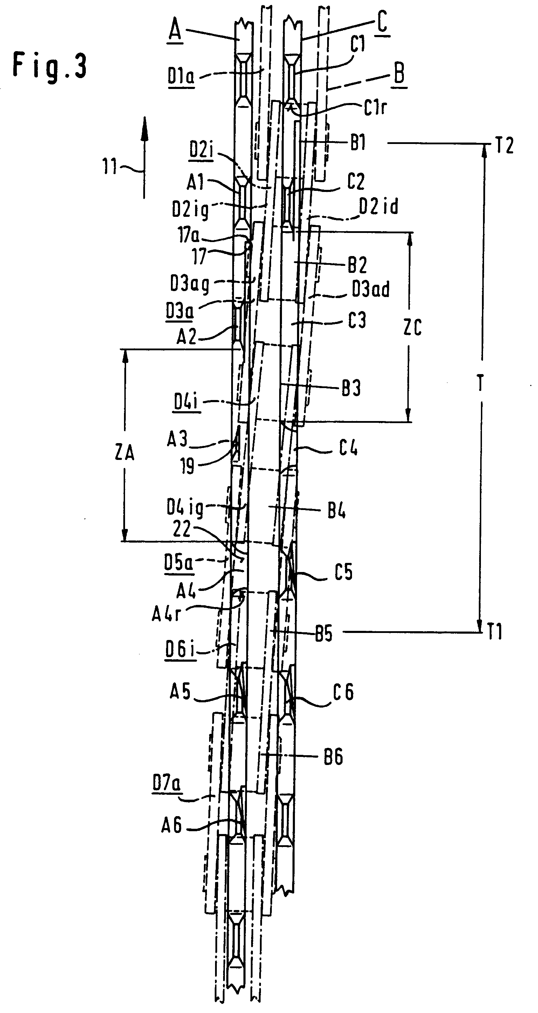

Das kleine Kettenrad C weist zwischen seinen Zähnen C2 und C4 ebenfalls eine Zahnfehlstelle C3 auf. Die beiden Fehlstellen A3 und C3 ergeben vergrößerte Zahnlücken ZA und ZC. Diese Zahnlücken ZA und ZC erleichtern den Übergang der Kette B von dem kleinen Kettenrad C auf das große Kettenrad A. Dies läßt sich aus der Figur 3 ersehen, wo die Übergangszone T und die Zahnlücken ZC und ZA ebenfalls eingezeichnet sind.

Zum Verständnis der weiteren Beschreibung ist vorab bezüglich des Aufbaus der Kette B noch auf folgendes hinzuweisen:

Die Kette B weist zwischen aufeinanderfolgenden Kettengelenkpunkten, zum Beispiel den Kettengelenkpunkten B1 und B2, ein inneres Kettenlaschenpaar D2i auf. Die in Figur 3 jeweils links liegende Kettenlasche eines Kettenlaschenpaars ist mit dem Index g benannt; dies ist diejenige Kettenlasche, die zu den größer werdenden Kettenrädern eines Kettenradsatzes hin gelegen ist, während die jeweils rechts liegende Kettenlasche mit dem Index d bezeichnet ist. Demgemäß besteht das Kettenlaschenpaar D2i aus den Kettenlaschen D2ig und D2id und das äußere Kettenlaschenpaar D3a aus den beiden Kettenlaschen D3ag und D3ad. Zwischen den weiteren Kettengelenkpunkten B3 und B6 folgen dann abwechselnd ein inneres Kettenlaschenpaar D4i, ein äußeres Kettenlaschenpaar D5a und wieder ein inneres Kettenlaschenpaar D6i usw.

Die Kettenrolle 14 des Kettengelenkpunkts B1 liegt noch voll in Eingriff mit zwei aufeinanderfolgenden Zähnen C1 und C2 des kleinen Kettenrads C. Die Kettenrolle 14 des Kettengelenkpunkts B2 ist aus der vergrößerten Zahnlücke ZC bereits etwas ausgehoben. Der nächste Kettengelenkpunkt B3 ist nicht in Treibeingriff mit dem Zahn A2, vielmehr liegt die linke Kettenlasche D3ag des äußeren Kettenlaschenpaars D3a in Figur 3 rechts von dem Zahn A2, wobei die radiale Höhenlage des Kettengelenkpunkts B3 dadurch bestimmt ist, daß die linke Kettenlasche D3ag des Kettenlaschenpaars D3a auf einer Rampe 16 aufliegt, welche eine reliefartige Vertiefung 17 in der dem Betrachter gemäß Figur 2 zugekehrten, in Figur 3 rechts liegenden Vorderseite des großen Kettenrads A nach radial innen begrenzt. Der Kettengelenkpunkt B3 ist also gegenüber dem Zahn A2 senkrecht zur Zeichenebene der Figur 2 und in Figur 3 nach rechts versetzt und ist außer Treibeingriff mit dem Zahn A2, wie sich insbesondere auch aus Figur 3 ergibt. Der Zahn A4 greift zwischen die beiden Kettenlaschen des äußeren Kettenlaschenpaars D5a ein. Der Kettengelenkpunkt B5 ist der erste Gelenkpunkt, der mit seiner Kettenrolle 14 zwischen zwei aufeinanderfolgende Zähne A4 und A5 des großen Kettenrads A eingreift.

Man erkennt in Figur 2, daß der Gelenkpunkt B2 von dem Boden ZC1 der vergrößerten Zahnlücke ZC abgehoben ist; dies bedeutet, daß die Übergangskettenstrecke B1-B5 auch mit ihrem in Umlaufrichtung vordersten Abschnitt B1,B2 nicht tangential in das kleine Kettenrad C einläuft, sondern unter einem spitzen Winkel gegen eine Tangente an das kleine Kettenrad C, die durch den Gelenkpunkt B1 gelegt ist.

Aus der Figur 3 ist ersichtlich, daß die vergrößerten Zahnlücken ZC und ZA eine "Kettengasse" bilden und den Übergang der Kette B von dem mit dem kleinen Kettenrad C in Eingriff stehenden Gelenkpunkt B1 zu dem mit dem großen Kettenrad A in Eingriff stehenden Gelenkpunkt B5 erleichtern. Bei Einleiten des Kettenübergangs von dem kleinen Kettenrad C auf das große Kettenrad A wird die in Figur 2 hintere, in Figur 3 linke Kettenlasche D3ag des äußeren Kettenlaschenpaars D3a in Richtung auf eine reliefartige Vertiefung 17 gedrückt, so daß die radial innere Kante dieser hinteren Kettenlasche D3ag sich im weiteren Verlauf der Drehung des Kettenradsatzes gegen die Rampe 16 anlegt, welche die reliefartige Vertiefung 17 nach radial innen begrenzt. Zu beachten ist dabei, daß die hintere Kettenlasche D3ag des äußeren Kettenlaschenpaars D3a nicht voll in die Vertiefung 17 hineinfällt, sondern um deren hintere Endkante 17a kippt.

Der Übergang der Kette B von dem kleinen Kettenrad C auf das große Kettenrad A wird, wie bereits erwähnt, durch eine Bewegung des Leitrades 10 senkrecht zur Zeichenebene der Figur 1 eingeleitet, und zwar - entsprechend Figur 3 - durch eine Bewegung des Leitrads 10 von rechts nach links. Durch diese Bewegung des Leitrads 10 von rechts nach links wird ein Vorbereitungszustand für den Kettenübergang herbeigeführt. Die Kette B kann aber solange nicht auf das große Kettenrad A übergehen, als die Kette B seitlich an den Zähnen A1 und A2 anliegt. Erst wenn im weiteren Verlauf der Drehung des Kettenradsatzes in Pfeilrichtung 11 die im Einlaufbereich 15 einlaufende Lasche D3ag des äußeren Kettenlaschenpaars D3a durch die Rampe 16 nach radial auswärts angehoben worden ist und das innere Kettenlaschenpaar D4i in Deckung mit der vergrößerten Zahnlücke ZA gekommen ist, kann der Übergang auf das große Kettenrad stattfinden, indem dann der Zahn A4 des großen Kettenrads A zwischen die Kettenlaschen des äußeren Kettenlaschenpaars D5a eingreift.

Zu beachten ist, daß auch dann, wenn ein Sporn 19 an der Zahnfehlstelle A3 vorhanden ist, dieser Sporn 19 zu keinem Zeitpunkt als Zahn wirksam ist, d.h. in keinem Zeitpunkt zur Drehmomentübertragung von der Kette B auf das große Kettenrad A wirksam ist. Solange der Übergangsbereich T der Kette B von der Einlaufstelle 15 zum Ablaufbereich L wandert, liegt die Kettenrolle 14 des Kettengelenkpunktes B5 der in Pfeilrichtung 11 nachlaufenden Flanke A4r des Zahns A4 drehmomentübertragungsfähig bei 21 gegenüber und andererseits liegt die Kettenrolle 14 des Kettengelenkpunktes B1 der in Pfeilrichtung 11 nachlaufenden Flanke C1r des Zahns C1 drehmomentübertragungsfähig bei 20 gegenüber. Wenn im weiteren Verlauf der Drehung des Kettenradsatzes A,C die Drehmomentübertragungsstelle 20 zwischen dem Gelenkpunkt B1 und der Nachlaufflanke des Zahns C1 in den Ablaufbereich L einläuft, wird die Kettenrolle 14 des Gelenkpunktes B1 aus dem Eingriff zwischen den beiden Zähnen C1 und C2 ausgehoben, die Drehmomentübertragung an der Stelle 20 entfällt und es findet nunmehr eine Drehmomentübertragung an der Stelle 21 zwischen dem Kettengelenkpunkt B5 und der Nachlaufflanke A4r statt, wobei das nachlaufende Laschenende der in Figur 3 linken Lasche D3ag des äußeren Kettenlaschenpaars D3a sich in Pfeilrichtung 11 am nachlaufenden Ende der Rampe 16 und/oder am Grund ZA1 der vergrößerten Zahnlücke ZA nach wie vor abstützt. Gemäß Figuren 2 und 3 liegt die in Figur 3 links gelegene linke Kettenlasche D4ig des inneren Kettenlaschenpaars D4i rechts von dem etwa vorhandenen Sporn 19.

Bei der Beschreibung der Figuren 2 und 3 wurde davon ausgegangen, daß mit dem Bereich der vergrößerten Zahnlücke ZA ein inneres Kettenlaschenpaar D4i zusammenfällt.

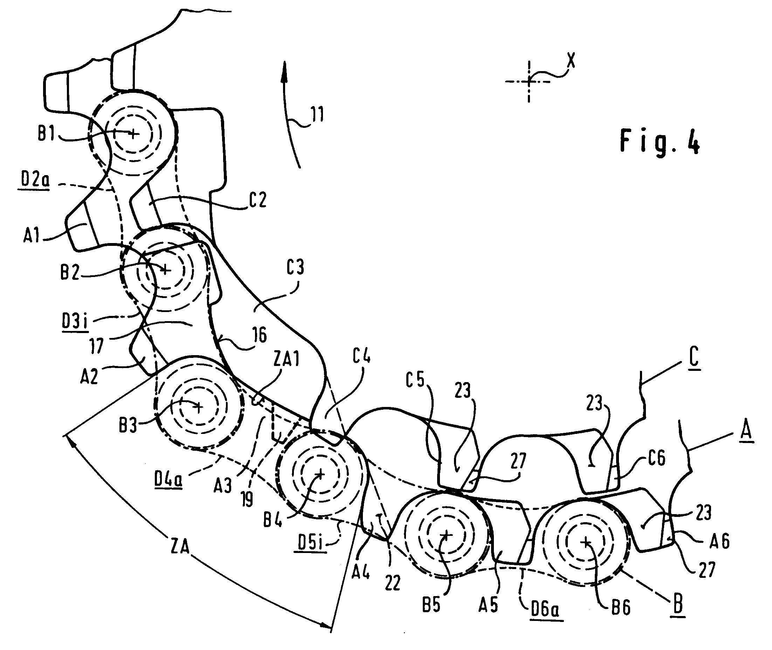

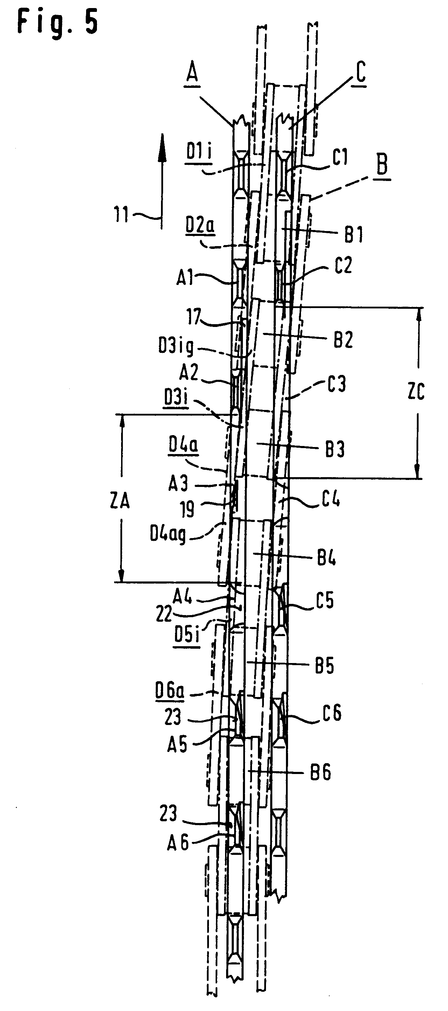

Der Fall, daß ein äußeres Ketenlaschenpaar D4a mit dem Bereich der vergrößerten Zahnlücke ZA zusammenfällt, ist in den Figuren 4 und 5 dargestellt.

Aus der Figur 5 erkennt man, daß der an der Zahnfehlstelle A3 etwa vorhandene Sporn 19 nunmehr zwischen den beiden Laschen des äußeren Kettenlaschenpaars D4a eingreift, was dadurch ermöglicht wird, daß an der Stelle A3 kein Zahn vorhanden ist, sondern eben nur der Sporn 19, welcher keine Drehmomentübertragungsfunktion besitzt, sondern allenfalls eine seitliche Kettenführungsfunktion beim Rückwärtstreten, so daß dieser Sporn ohne die Gefahr einer Überlastung in Längs- und in Querrichtung der Kette so klein ausgebildet werden kann, daß er zum einen gemäß Figur 3 außerhalb der Kette und zum anderen gemäß Figur 5 innerhalb der Kette liegen kann. Wäre an der Stelle A3 ein Zahn vorhanden, so wäre es nicht möglich, einerseits gemäß Figur 3 die linke Innenlasche D4ig des inneren Kettenlaschenpaars D4i durch den Bereich ZA hindurch an der rechten Seite des Sporns 19 vorbeizuführen und andererseits gemäß Figur 5 die linke Lasche D4ag des äußeren Kettenlaschenpaars D4a durch den Bereich ZA so an der linken Seite des Sporns 19 vorbeizuführen, daß in beiden Fällen der nachfolgende Zahn A4 zwischen die beiden Laschen des äußeren Kettenlaschenpaars D5a (Figur 3) bzw. des inneren Kettenlaschenpaars D5i hineintreten kann (Figur 5).

Auch in dem Zustand nach den Figuren 4 und 5 wird - wenn vorhanden - der Sporn 19 niemals als ein mit den Kettenrollen 14 der benachbarten Gelenkpunkte zusammenwirkender Zahn wirksam. Man erkennt weiter aus Figuren 4 und 5, daß im Gegensatz zu Figuren 2 und 3 der Rampe 16 die Lasche D3ig des inneren Kettenlaschenpaars D3i zugeordnet ist. Die Abstützung des Kettengelenkpunktes B3 erfolgt hier dadurch, daß das Vorlaufende der in Figur 5 linken Kettenlasche D4ag des äußeren Kettenlaschenpaars D4a sich am Grund ZA1 der verlängerten Zahnlücke ZA abstützt.

Es ist ein besonderer Vorteil, daß gemäß Figur 2 einerseits und gemäß Figur 4 andererseits jeweils der gleiche Zahn A4 zwischen die Laschen des äußeren Kettenlaschenpaars D5a bzw. des inneren Kettenlaschenpaars D5i eingreift.

Derjenige Zahn A4 des großen Kettenrads A, der beim Übergang der Kette von dem kleinen Kettenrad C auf das große Kettenrad A als erster Zahn zwischen die Kettenlaschen eines Kettenlaschenpaars D5a bzw. D5i eintritt, ist mit einer Abschrägung 22 versehen (Figuren 3,5 und 6). Die Abschrägung 22 bedeutet eine Schwächung des Zahns A4. Wenn unabhängig von der Zuordnung eines inneren Kettenlaschenpaars oder eines äußeren Kettenlaschenpaars zur Zahnlücke ZA jedesmal der gleiche Zahn A4 gemäß Figuren 3 und 5 als erster zwischen die Laschen des jeweiligen Kettenlaschenpaars D5a bzw. D5i eintritt, so bedeutet dies, daß nur ein Zahn, im Beispielsfall der Zahn A4, mit der Schräge 22 versehen und damit geschwächt werden muß. Es sei hier im Vorgriff auf die spätere Beschreibung des Umschaltvorgangs der Kette B von dem größeren Kettenrad A auf das kleinere Kettenrad C darauf hingewiesen, daß es auf diese Weise möglich wird, an den Zähnen A5 und A6 gemäß Figuren 2 und 4 andere Abschrägungen 23 anzubringen, die im Hinblick auf den Umschaltvorgang von dem großen Kettenrad A auf das kleine Kettenrad C erwünscht sind. Würde man nämlich an dem Zahn A5 auch noch eine Abschrägung 22 anbringen müssen entsprechend der Abschrägung 22 am Zahn A4, so würde die gleichzeitige Anbringung der Abschrägung 23 zu einer übermäßigen Schwächung des Zahns A5 führen, was zum Abbrechen oder vorzeitigen Verschleiß des drehmomentbelasteten Zahns A5 führen könnte.

Bei Einleitung des Kettenübergangs von dem kleinen Kettenrad C auf das große Kettenrad A entsprechend Figuren 4 und 5 wird die gemäß Figur 5 linke Lasche D4ag des äußeren Kettenlaschenpaars D4a in die vergrößerte Zahnlücke ZA hineingedrückt. Im weiteren Verlauf der Drehung in Pfeilrichtung F ergeben sich dann die in Figur 4 und 5 gezeigten Stellungen des inneren Laschenpaars D3i und des äußeren Laschenpaars D4a, wobei der Sporn 19, sofern vorhanden, zwischen die beiden Laschen des äußeren Laschenpaars D4a hineintritt. Wenn bei diesem Vorgang die linke Lasche D3ig des inneren Laschenpaars D3i keine oder keine ausreichende Unterstützung auf der Rampe 16 findet, so wird diese Unterstützung ersetzt durch das Aufliegen der linken Lasche D4ag auf dem Grund ZA1 der vergrößerten Zahnlücke ZA.

Der Übergang von der Drehmomentübertragung zwischen der Kette B und dem kleinen Kettenrad C auf die Drehmomentübertragung zwischen der Kette B und dem großen Kettenrad A andererseits erfolgt im weiteren Verlauf so, wie für die Situation gemäß Figuren 2 und 3 beschrieben.

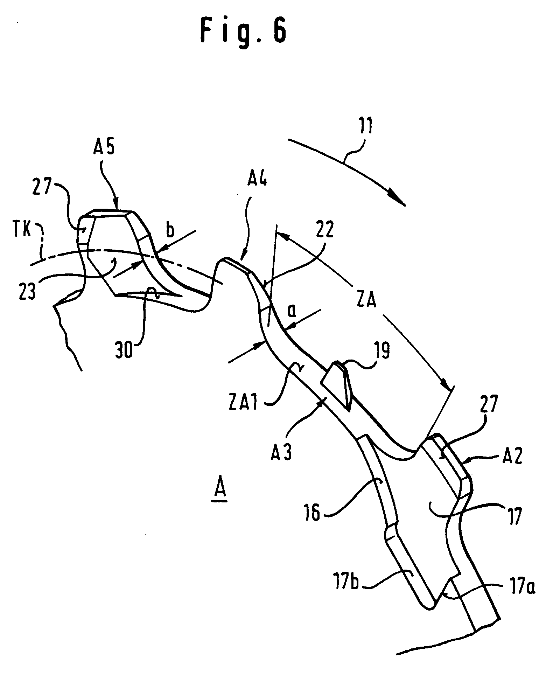

Einzelheiten des großen Kettenrads A im Bereich der vergrößerten Zahnlücke ZA sind in der Figur 6 zu erkennen. Es wird dort insbesondere auf die Gestaltung der reliefartigen Vertiefung 17 mit der Rampe 16, der Kante 17a und der radial einwärts vorgenommenen Erweiterung 17b sowie auf die Gestaltung der vorbeschriebenen Abschrägungen 22 und 23 hingewiesen. Man erkennt ferner den Grund der vergrößerten Zahnlücke ZA, der mit ZA1 bezeichnet ist.

Die Zähne A1,A2 und A5 sind mit Abschrägungen 27 versehen. Bei Einleitung des Schaltvorgangs von dem kleinen Kettenrad C auf das große Kettenrad A wird das Leitrad 10 und demgemäß auch die Kette B in Richtung auf das große Kettenrad A hingedrückt und angenähert. Damit trotz dieser Annäherung die Kette nicht auf die Zahnspitzen der Zähne des großen Kettenrads auflaufen kann, sind diese Abschrägungen 27 vorgesehen. Wenn sich die Kette B nach dem Einlauf in den Kettenradsatz im Zuge der Weiterdrehung des Kettenradsatzes bezüglich der Achse des Kettenradsatzes radial nach innen bewegt, trifft sie nicht auf die Zahnspitzen, sondern auf die Abschrägungen 27 und gleitet dann über die Abschrägungen 27 in Richtung auf den Eingriff mit dem kleinen Kettenrad C zurück. Erst wenn im Zuge der Weiterdrehung des Kettenradsatzes in Pfeilrichtung die Kette axial der reliefartigen Vertiefung 17 und der vergrößerten Zahnlücke ZA gegenübersteht, wird der Eingriff mit dem kleinen Kettenrad C aufgehoben, indem die Kette nunmehr unter der Einwirkung axialer Bewegung des Leitrads in Richtung von dem kleinen Kettenrad C weg bewegt werden kann.

Am Zahn A4 fehlt die Abschrägung 27. Dieser Zahn A4 weist die Abschrägung 22 auf seiner von dem kleinen Kettenrad abgelegenen Seite auf, damit der Zahn A4 gleichgültig, ob er in Radialflucht mit den Außenlaschen D5a gemäß Figur 3 oder mit den Innenlaschen D5i gemäß Figur 5 tritt, zwischen die jeweiligen Laschen einfädeln kann.

Die Figuren 3 und 5 lassen erkennen, daß keiner der am Kettenübergang beteiligten Zähne eine Sprengwirkung auf ein Kettenlaschenpaar ausüben kann. Dies gilt insbesondere auch dort, wo Zähne in innere Laschenpaare, also in enge Zwischenräume zwischen zwei Innenlaschen, eingreifen und wo deshalb nach dem Stand der Technik stets die Gefahr eines Absprengens der Außenlaschen von den Kettenbolzen bestand.

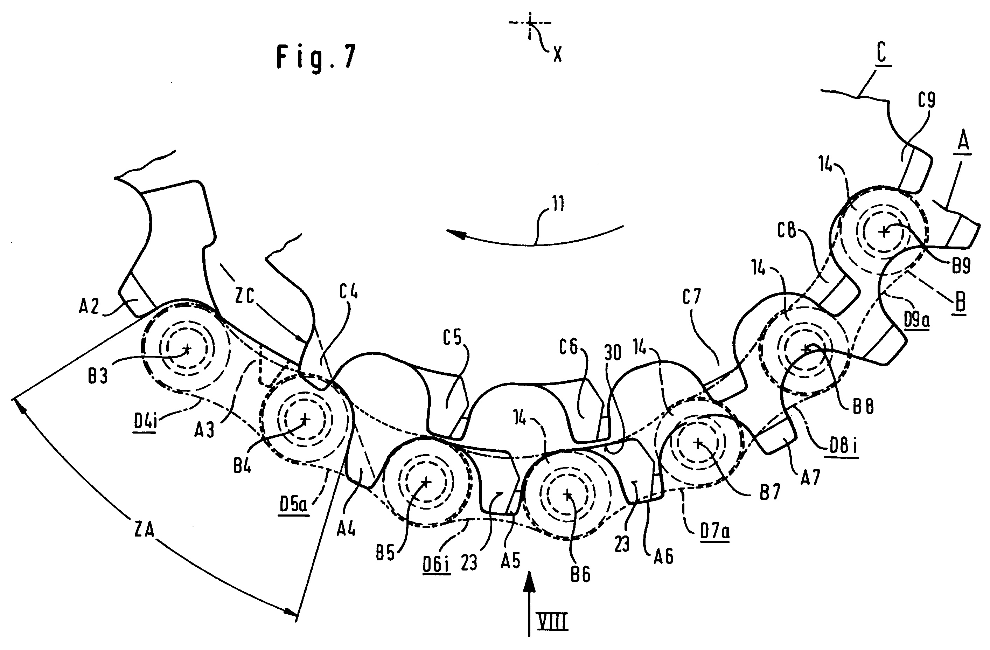

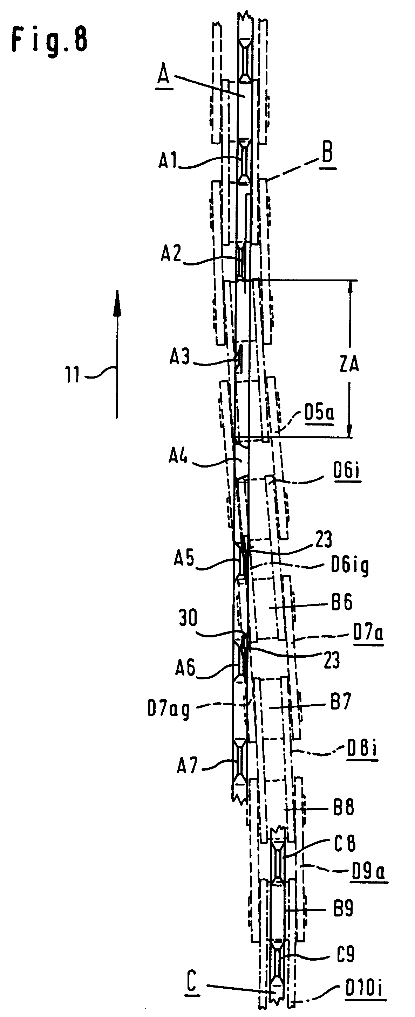

In den Figuren 7 und 8 ist das Umschalten von dem großen Kettenrad A auf das kleinere Kettenrad C im einzelnen dargestellt. Für die Betrachtung des Umschaltvorgangs ist in Figur 7 der Bereich zwischen dem Zahn A2 des großen Kettenrads und dem Zahn C9 des kleinen Kettenrads relevant.

In einer Darstellung entsprechend Figur 1 für den Zustand gemäß Figur 7 hat man sich den Zahn C9 in Umlaufrichtung 11 hinter der Stelle T1 der Figur 1 vorzustellen, während man sich den Zahn A2 in Umlaufrichtung 11 vor dem Ablaufbereich L vorzustellen hat.

In den Figuren 6, 7 und 8 sind an den Zähnen A5 und A6 die Abschrägungen 23 angebracht, wozu insbesondere auf Figur 6 verwiesen wird. Die Zähne A5 und A6 sind diejenigen Zähne, die entgegen der normalen Umlaufrichtung 11 als erster Zahn A5 und als zweiter Zahn A6 auf denjenigen Zahn A4 folgen, welcher bei der zuvor betrachteten Umschaltung von dem kleinen Kettenrad C auf das große Kettenrad A als erster zwischen die Laschen eines Laschenpaars eingegriffen hat. Anders ausgedrückt kann man auch sagen, daß der Zahn A5 mit der Abschrägung 23 derjenige Zahn ist, der entgegen der Umlaufrichtung 11 als zweiter auf die Fehlstelle A3 folgt und der Zahn A6 mit der Abschrägung 23 derjenige ist, der als dritter Zahn auf die Fehlstelle A3 folgt.

Das Umschalten von dem großen Kettenrad A auf das kleine Kettenrad C ist grundsätzlich weniger kritisch als das Umschalten von dem kleinen Kettenrad C auf das große Kettenrad A. Dies liegt zum ersten darin begründet, daß es leichter ist, die unter Spannung stehende Kette B von einem großen Kettenrad A auf ein kleines Kettenrad C umzusetzen, was durch die Kettenspannung unterstützt wird. Ein weiterer Grund liegt darin, daß der Übergang von einem großen Kettenrad auf ein kleines Kettenrad dann vorgenommen wird, wenn man in der Richtung vom Berggang zum Schnellgang schalten will: dann liegt regelmäßig eine für das Umschalten günstige größere Umlaufgeschwindigkeit vor und andererseits auch ein für das Umschalten günstiges geringeres Drehmoment. Trotzdem wird angestrebt, auch das Umschalten von dem größeren Kettenrad A auf das kleinere Kettenrad C möglichst rasch, stoßfrei und geräuscharm zu bewirken. Diesem Ziele dienen nun die Abschrägungen 23 an den Zähnen A5 und A6, wobei bezüglich des Zahns A5 insbesondere wieder auf die Figur 6 verwiesen wird. Die Abschrägungen 23 sind, wie insbesondere aus Figur 6 und aus Figur 8 zu ersehen, längs einer Umfangslinie TK (Figur 6) gegenüber einer zur Achse des Kettenradsatzes orthogonalen Ebene so geneigt, daß bei Fortschreiten in Drehrichtung 11 längs der Umfangslinie TK die Schrägfläche 23 von dem benachbarten kleineren Kettenrad C zunehmenden axialen Abstand hat. Dies ergibt sich auch aus dem Vergleich der Zahndicken b und a im Bereich der jeweiligen Vorlaufflanke der Zähne A5 und A4, wo b geringer ist als a.

Wenn man von dem größeren Kettenrad A auf das kleinere Kettenrad C schalten will, so bewegt man in Figur 1 das Leitrad 10 wiederum orthogonal zur dortigen Zeichenebene, jedoch diesmal auf den Betrachter zu, das heißt, in Figur 8 betrachtet nach rechts; mit anderen Worten: man versucht die Kette B in Achsrichtung des Kettenradsatzes auf das benachbarte kleinere Kettenrad C hinzuschieben. Der Übergang der Kette wird erleichtert, wenn sich der Zahn A5 oder der Zahn A6 im Einlaufbereich 15 (siehe Figur 1) befindet. Dann kann nämlich gemäß Figur 8 die in Figur 8 linke Lasche D6ig des inneren Kettenlaschenpaars D6i im Bereich des Zahns A5 an die dem kleineren Kettenrad C zugekehrte Schrägfläche 23 gelangen. Dann können die dem inneren Kettenlaschenpaar D6i folgenden Kettenlaschenpaare D7a, D8i und D9a beim Einlauf an der Stelle 15 nicht mehr in Eingriff mit den auf den Zahn A6 folgenden Zähnen des großen Kettenrads A gelangen. Die Kette senkt sich auf den Außenumfang des kleinen Kettenrads C radial einwärts bezüglich der Achse des Kettenradsatzes ab. Die Gelenkpunkte B6, B7 und B8 können mit ihren Kettenrollen 14 noch nicht zwischen aufeinanderfolgende Zähne des kleinen Kettenrads eingreifen, wie aus Figur 7 durch die dortige Darstellung des Umfangsversatzes ersichtlich. Eine Radialeinwärtsbewegung des Gelenkpunktes B6 ist dadurch verhindert, daß die in Figur 8 links liegende Lasche D7ag des äußeren Kettenlaschenpaars D7a sich an der Schulter 30 (siehe Figur 6) abstützt, die als Folge der Abschrägung 23 entstanden ist, andererseits können sich die Kettenrollen 14 der Gelenkpunkte B7 und B8 an den Zähnen C7 bzw. C8 anlehnen. Dagegen kann der Gelenkpunkt B9 zwischen die aufeinanderfolgenden Zähne C8 und C9 eingreifen. Die Existenz der verlängerten Zahnlücke ZA begünstigt zusammen mit den Abschrägungen 23 der Zähne A5 und A6 die Schrägstellung der Kette bei einer Bewegung des Leitrads 10 in Richtung auf das kleinere Kettenrad, wie aus Figur 8 ersichtlich. Auch die vergrößerte Zahnlücke ZC gemäß Figur 7 kann zur Erleichterung des Kettenübergangs zwischen dem großen Kettenrad und dem kleinen Kettenrad C beitragen.

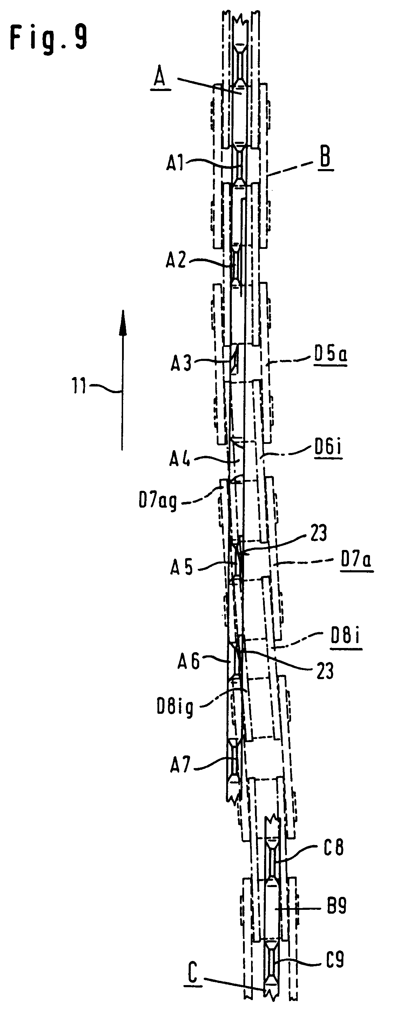

Die Figur 9 zeigt die Situation, daß bei einer Umschaltung der Kette B von dem großen Kettenrad A auf das kleine Kettenrad C im Bereich der Zahnfehlstelle A3 ein äußeres Kettenlaschenpaar D5a und demgemäß im Bereich des Zahns A4 ein inneres Kettenlaschenpaar D6i und im Bereich des Zahns A5 ein äußeres Kettenlaschenpaar D7a liegt. Dann kann an der Einlaufstelle 15 gemäß Figur 1 die Kette aufgrund ihrer beschränkten Biegefähigkeit aus ihrer Hauptebene nicht soweit ausgebogen werden, daß die in Figur 9 linke Lasche D7ag des äußeren Kettenlaschenpaars D7a rechts von dem Zahn A5 zu liegen kommt; vielmehr wird die linke Lasche D7ag des äußeren Kettenlaschenpaars D7a gemäß Figur 9 noch auf der linken Seite des Zahns A5 vorbeigehen. Erst die dem Zahn A6 zugeordnete linke Lasche D8ig des inneren Kettenlaschenpaars D8i kann dann an der in Figur 9 rechten Seite des Zahns A6 vorbeigehen. Hier begünstigt dann die Schräge 23 des Zahns A6 den Übergang der Kette von dem großen Kettenrad A auf das kleine Kettenrad C. Für beide Situationen gemäß Figuren 7 und 8 einerseits und gemäß Figur 9 andererseits gilt, daß es eine Schaltpräferenz an einem bestimmten Zahn A5 bzw. A6 des großen Kettenrads A gibt. Die Kette wird deshalb mit erhöhter Wahrscheinlichkeit dann auf das kleine Kettenrad C wechseln, wenn nach einmal erfolgter Verstellung oder Vorspannung des Leitrads 10 in Richtung auf das kleinere Kettenrad C im Einlaufbereich 15 der Zahn A5 bzw. A6 vorliegt.

Die Figur 1 läßt erkennen, daß es am großen Kettenrad A insgesamt drei vergrößerte Zahnlücken ZA und am kleinen Kettenrad C zwei vergrößerte Zahnlücken ZC gibt. Dies resultiert aus dem eingangs erwähnten Zähnezahlverhältnis 21:18, das eine Zähnezahldifferenz von 3 ergibt. Es können deshalb bei einer vorbestimmten Winkelanordnung der beiden Zahnräder A und C entsprechend den Darstellungen in den Figuren beispielsweise zwei Übergangsbereiche geschaffen werden, in denen sowohl Übergänge vom großen Kettenrad zum kleinen Kettenrad als auch vom kleinen Kettenrad zum großen Kettenrad möglich sind. In diesen Übergangsbereichen sind jeweils übereinstimmende Verzahnungskonfigurationen der beiden Kettenräder gegeben. Die vorstehend unter Bezugnahme auf die Figuren 1 bis 9 beschriebenen Zahnverhältnisse sind im Bereich jeder dieser vergrößerten Zahnlücken ZA und ZC vorhanden, so daß an insgesamt jeweils 3 Stellen vom kleinen Kettenrad C auf das große Kettenrad A geschaltet werden kann und für den Übergang von dem großen Kettenrad A auf das kleine Kettenrad C an zwei Stellen eine Präferenz besteht. Wegen des erleichterten Übergangs der Kette B von dem großen Kettenrad A auf das kleine Kettenrad C kann zwar nicht mit Sicherheit erwartet werden, daß jedesmal, wenn das Leitrad 10 an das kleine Kettenrad C angenähert wird, die Schaltung erst an den Präferenzstellen erfolgt, so wie vorstehend unter Bezugnahme auf Figuren 7 bis 9 beschrieben. Es besteht jedoch eine erhöhte Wahrscheinlichkeit, daß an diesen Präferenzstellen die Umschaltung stattfindet, so daß sich für den Benutzer das Verhalten der Kettenschaltung auch im Hinblick auf das Schalten vom großen Kettenrad A auf das kleine Kettenrad C unter Last als besonders stoßfrei und geräuscharm darstellt.

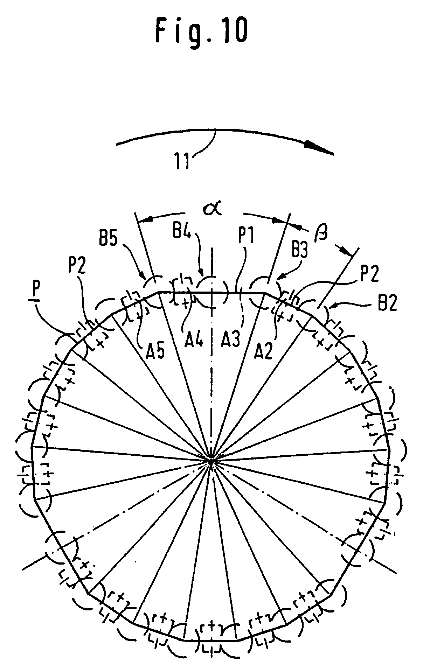

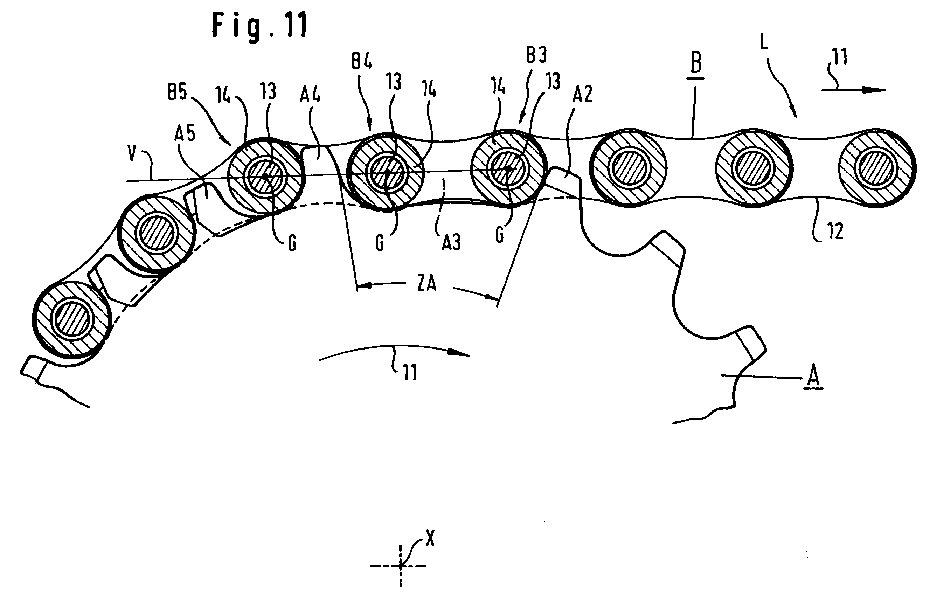

Unter Bezugnahme auf die Figuren 10 und 11 ist folgendes zu beachten: Man erkennt insbesondere in Figur 11 aus der dortigen Eingriffssituation zwischen dem großen Kettenrad A und der Kette B, daß die Kettenbolzen 13 und die zugehörigen Kettenrollen 14 mit ihren Gelenkachsen G auf einer geradlinigen Verbindungslinie V angeordnet sind. Dies entspricht nicht dem einfachen Weglassen eines Zahns in der Position A3 zwischen den Zähnen A2 und A4; die Zahnlücke ZA ist vielmehr anders gestaltet als wenn nur der Zahn A3 zwischen den Zähnen A2 und A4 "herausgefeilt" würde. Die Anordnung der Gelenkachsen G der Gelenkpunkte B3, B4 und B5 auf der geraden Verbindungslinie V führt dazu, daß trotz des Vorhandenseins der vergrößerten Zahnlücken ZA in dem großen Kettenrad A (dies gilt aber auch für das kleine Kettenrad C) immer perfekte Eingriffsverhältnisse zwischen der Kette und den Zahnlücken einschließlich der vergrößerten Zahnlücken bestehen. Man kann sich dies auch so vorstellen, daß sich die Kettenstrecke zwischen den Gelenkpunkten B3 und B5 trotz des Zwischengelenkpunkts B4 wie ein einziger starrer Kettenabschnit zwischen den Gelenkpunkten B3 und B5 verhält, welcher der vergrößerten Länge der Zahnlücke ZA entspricht. Dies ist insbesondere dann von großer Bedeutung, wenn gemäß Figuren 1 und 11 die Kette B im Bereich L von dem Kettenradsatz A,C abläuft und die Verbindungslinie V annähernd parallel zu dem Kettenobertrum 12 liegt, welches zu einem tretkurbelseitigen Kettenrad führt.

Es wurde festgestellt, daß die Gestaltung, die in der Anordnung der Gelenkpunkte B3,B4 und B5 auf einer gemeinsamen Verbindungslinie zum Ausdruck kommt, ein verbessertes Verhalten der Kettenschaltung erreicht wird, sowohl unter dem Gesichtspunkt der Stoß- und Geräuschfreiheit als auch unter dem Gesichtspunkt der Beanspruchung und Abnutzung sowohl von Kette als auch von Kettenrädern.

Die Anordnung, die in Figur 11 vergrößert dargestellt ist, erkennt man in Figur 10 anhand des gesamten Umfangs des Kettenradsatzes. Man erkennt dort in Figur 10 eine unregelmäßige Polygonlinie P, innerhalb welcher verlängerte Polygonseiten P1 mit kürzeren Polygonseiten P2 abwechseln. Die längeren Polygonseiten P1 entsprechen einem Zentriwinkel α und erstrecken sich vom Gelenkpunkt B5 bis zum Gelenkpunkt B3. Die Polygonseite P1 entspricht dabei der Verbindungslinie V gemäß Figur 11. Die kürzere Polygonseite P2 entspricht beispielsweise der Verbindung zwischen dem Gelenkpunkt B2 und dem Gelenkpunkt B3. Die Zähne A2,A4,A5 und die Zahnfehlstelle A3 sind auch in Figur 10 schematisch angedeutet. Die Gestaltung eines Kettenrads gemäß Figur 10 erfordert insofern erheblichen Aufwand, als die Zahn- und Zahnlückenverteilung über den Umfang entsprechend der Polygonlinie P jedesmal gesondert berechnet werden muß.

Es ist bekannt, daß die polygonartige Verteilung der Gelenkpunkte auf einem Kettenrad auch dann, wenn das Polygon ein regelmäßiges, gleichseitiges Polygon ist, zu Schwankungen in der Größe des übertragenen Drehmoments und damit zu Drehmomentänderungen führt, die dem Radfahrer bemerkbar werden können.

Bei der erfindungsgemäßen Gestaltung eines Kettenrads gemäß Figur 10 ist die Möglichkeit solcher Schwankungen wegen der Ungleichmäßigkeiten des Polygonverlaufs noch vergrößert. Es hat sich jedoch gezeigt, daß diese Erscheinung in Kauf genommen werden kann, wenn man den Vorteil der verringerten Ketten- und Kettenradabnutzung und der verminderten Schaltgeräusche in Betracht zieht.

Was vorstehend anhand von zwei Kettenrädern eines getriebenen nabenseitigen Kettenradsatzes eines Fahrrads ausgeführt wurde, gilt auch für jede andere Paarung von zwei einander benachbarten Kettenrädern, wenn der Kettenradsatz mehr als zwei solcher Kettenräder umfaßt. Die Gestaltung sämtlicher Kettenräder muß im Hinblick auf die Zähnezahl benachbarter Kettenräder bestimmt werden und insbesondere im Hinblick auf die Zähnezahlverhältnisse zwischen benachbarten Kettenrädern. Ebenso muß die Winkeleinstellung zwischen den Kettenrädern jedes Kettenradpaars ein für allemal festgelegt werden, so daß beim Schalten von dem kleinen auf das große Kettenrad die Kettenlänge des gekrümmt oder abgeknickt verlaufenden Kettenabschnitts B1-B5 zwischen den Gelenkpunkten B1 und B5 jeweils wenigstens annähernd dem durch die dort herrschende Zahngeometrie vorgegebenen Wegverlauf dieses Kettenabschnitts zwischen den Gelenkpunkten B1 und B5 entspricht. Bei Zähnezahldifferenzen von mehr als 3 können auch mehr als die genannten Gelenkpunkte B1-B5 in den Übergangsbereich fallen. Im übrigen ist es nicht zwingend, daß radial innerhalb einer vergrößerten Zahnlücke ZA des größeren Kettenrads auch eine vergrößerte Zahnlücke ZC des kleineren Kettenrads liegt und insbesondere ist die in Figur 1 gezeigte Vorlaufanordnung der vergrößerten Zahnlücke ZC des kleineren Kettenrads gegenüber der vergrößerten Zahnlücke ZA des größeren Kettenrads nicht zwingend. Der Übergangskettenabschnitt T darf weder zu locker noch zu stramm sein, wenn einerseits der Gelenkpunkt B1 im Eingriff zwischen den Zähnen C1 und C2 und andererseits der Gelenkpunkt B5 im Eingriff zwischen den Zähnen A4 und A5 ist. Nur dann ist gewährleistet, daß ein stoß- und geräuschfreier Übergang der Drehmomentübertragung zwischen den verschiedenen Kettenrädern stattfindet.

Es versteht sich, daß in jedem Kettenrad der Mittelpunktabstand zweier in Eingriff befindlicher Kettenrollen 14, also der Mittelpunktabschnitt etwa zwischen den Kettenrollen B2 und B3 der Kettenteilung von Gelenkpunkt zu Gelenkpunkt entspricht. Dies muß für alle beteiligten Kettenräder gelten.

Die vorstehend anhand eines Hinternaben-Kettenradsatzes eines Fahrrads erläuterten Prinzipien sind auch dann anzuwenden, wenn ein tretkurbelseitiger Kettenradsatz mit mehreren Kettenrädern ausgestattet ist und die Kette zur Veränderung des Übersetzungsverhältnisses zwischen verschiedenen Kettenrädern des Tretkurbel-Kettenradsatzes umgelegt werden soll.

Es wurde im Vorstehenden davon ausgegangen, daß jeweils nur ein Zahn zwischen zwei aufeinanderfolgenden Zähnen eines Kettenrads ausgespart werden soll. Es ist auch möglich, daß mehr als ein Zahn zwischen zwei aufeinanderfolgenden Zähnen des jeweiligen Kettenradsatzes ausgespart wird, wobei dann das Polygon gemäß Figuren 10 und 11 entsprechend ungleich wird. Der Vorteil der Aussparung von mehr als einem Zahn zwischen zwei benachbarten Zähnen liegt darin, daß dann die "Gasse" für den Kettendurchgang noch größer werden kann, so daß Probleme durch die Auslenkung der Kette aus ihrer Umlaufebene beim Umlegen der Kette vermieden werden.

Der am großen Kettenrd A in der vergößerten Zahnlücke ZA vorgesehene Sporn hat, wie schon mehrfach ausgeführt, keinerlei Zahnfunktion; er dient lediglich der seitlichen Kettenführung beim Rückwärtsbewegen der Kette entgegen der normalen Umlaufrichtung 11. Der Sporn wird in der Regel, wenn überhaupt, so nur in den vergrößerten Zahnlücken des jeweils größten Kettenrads oder der größten Kettenräder eines Kettenradsatzes vorgesehen.

## Patentansprüche

1. Kettenschaltung, insbesondere für Fahrräder, umfassend eine treibende Kettenradeinheit und eine angetriebene Kettenradeinheit (A-C) sowie eine diese beiden Kettenradeinheiten miteinander verbindende Kette (B),
wobei mindestens eine (A-C) der Kettenradeinheiten als Mehrkettenradeinheit (A-C) mit mindestens zwei Kettenrädern (A,C), nämlich einem größeren (A) und einem kleineren Kettenrad (C), ausgebildet ist,
wobei weiter die beiden Kettenräder (A,C) der Mohrkettenradeinheit (A-C) je eine Vielzahl von Zähnen (A1...;C1...) und eine entsprechende Vielzahl von zwischen jeweils einem Zahnpaar (A1,A2;C1,C2) gebildeten Zahnlücken (A1-A2;C1-C2) aufweist,
wobei weiter im allgemeinen die Zahnlücken (A1-A2;C1-C2) als Einfachzahnlücken zur Aufnahme jeweils eines Kettengelenks ausgebildet sind,
wobei weiter die Kette (B) von aufeinanderfolgenden Kettengelenken (B1...) und von inneren (D2i) und äußeren Laschenpaaren (D3a) in abwechselnder Reihenfolge zwischen den Kettengelenken (B1...) gebildet ist,
wobei weiter zum Umlegen der Kette zwischen den beiden Kettenrädern (A,C) der Mehrkettenradeinheit (A-C) eine Umlegeeinrichtung (10) in einem Einlaufbereich (15) vorgesehen ist, in welchem die Kette (B) bei normaler Umlaufrichtung (11) der Kette (B) und der Kettenräder (A,C) in die Mehrkettenradeinheit (A-C) einläuft und diese Umlegeeinrichtung (10) dazu ausgebildet ist, um der Kette (B) Bewegungen in einer zur Achse (X) der Mehrkettenradeinheit (A-C) parallelen Richtung zu erteilen,
wobei weiter beim Umlegen der Kette (B) zwischen cen Kettenrädern (A,C) der Mehrkettenradeinheit (A-C) sich eine Kettenübergangsstrecke (B1-B5) zwischen einem altbesetzten (C) und einem neubesetzten (A) der beiden Kettenräder ausbildet, welche Kettenübergangsstrecke (B1-B5) den Umlaufbereich der Mehrkettenradeinheit (A-C) vom Ketteneinlaufbereich (15) bis zu einem Kettenablaufbereich (L) der Mehrkettenradeinheit (A-C) durchläuft,
wobei weiter die Kettenübergangsstrecke (B1-B5) sich entgegen der normalen Umlaufrichtung (11) der Mehrkettenradeinheit (A,C) erstreckt von einem Kettengelenk (B1), das als letztes Kettengelenk (B1) zwischen zwei Letztzähne (C1,C2) eines Letztzähnepaars (C1,C2) des altbesetzten Kettenrads (C) eingreift, zu einem Kettengelenk (B5), das als erstes zwischen zwei Erstzähne (A4,A5) eines Erstzähnepaars (A4,A5) des neubesetzten Kettenrads (A) eingreift
und wobei in mindestens einem der Kettenumlegung in der Umlegerichtung vom kleineren Kettenrad (C) zum größeren Kettenrad (A) entsprechenden Kettenübergangumfangsbereich (T) der Mehrkettenradeinheit (A-C) an den Kettenrädern (A,C) Gestaltungsmaßnahmen getroffen sind, um in diesem Kettenübergangumfangsbereich (T) das Umlegen der Kette (B) zwischen den beiden Kettenrädern (A,C) zumindest in der Umlegerichtung vom kleineren Kettenrad (C) zum größeren Kettenrad (A) zu erleichtern und den Verlauf der entsprechenden Kettenübergangsstrecke (B1-B5) festzulegen,
gekennzeichnet durch die folgenden Merkmale:
a) in dem dem Umlegen von dem kleineren Kettenrad (C) auf das größere Kettenrad (A) entsprechenden Kettenübergangumfangsbereich (T) ist an dem größeren Kettenrad (A) unter Bildung einer zwischen Einfachzahnlücken angeordneten Doppelzahnlücke (ZA) ein Zahn (bei A3) ausgespart, welcher in der normalen Umlaufrichtung (11) dem vorlaufenden Erstzahn (A4) des Erstzähnepaars (A4,A5) des größeren Kettenrads (A) vorangeht;
b) an dem großen Kettenrad (A) ist auf seiner dem kleineren Kettenrad (C) zugekehrten Seitenfläche im Basisbereich eines Zahns (A2), welcher der Doppelzahnlücke (ZA) in der normalen Umlaufrichtung (11) vorausgeht und gewünschtenfalls noch in dem vorlaufenden Endbereich der Doppelzahnlücke (ZA) eine Laschenauflagerampe (16) ausgebildet, welche in normaler Umlaufrichtung (11) dem nachlaufenden Letztzahn (C2) des Letztzähnepaars (C1, C2) des kleineren Kettenrads (C) nachläuft;
c) durch die Laschenauflagerampe (16) und einen Boden (ZA1) der Doppelzahnlücke (ZA) ist ein - in axialer Richtung betrachtet - nach radial außen konvex gekrümmter oder geknickter Verlauf (B1,B2,B3,B4,B5) der Kettenübergangsstrecke (B1-B5) innerhalb des Kettenübergangumfangsbereichs (T) zwischen dem Erstzähnepaar (A4,A5) des größeren Kettenrads (A) und dem Letztzähnepaar (C1,C2) des kleineren Kettenrads (C) erzwungen, wobei die gekrümmte Kettenübergangsstrecke (B1-B5) in die Zahnlücke (C1-C2) zwischen den beiden Letztzähnen (C1,C2) des Letztzähnepaars (C1,C2) des kleineren Kettenrads (C) einmündet;
d) der in normaler Umlaufrichtung (11) vorauslaufende Erstzahn (A4) des Erstzähnepaars (A4,A5) des größeren Kettenrads (A) ist für den Eingriff sowohl zwischen die Laschen eines Innenlaschenpaars (D5i) als auch zwischen die Laschen eines Außenlaschenpaars (D5a) ausgebildet.

2. Kettenschaltung nach Anspruch 1,
dadurch gekennzeichnet,
daß an dem kleineren Kettenrad (C) ein auf den nachlaufenden Letztzahn (C2) des Letztzähnepaars (C1,C2) folgender Zahn (bei C3) unter Bildung einer Mehrfachzahnlücke (ZC) des kleineren Kettenrads (C) ausgespart ist.

3. Kettenschaltung nach einem der Ansprüche 1 und 2,
dadurch gekennzeichnet,
daß die Laschenauflagerampe (16) von dem radial inneren Rand einer reliefartigen Vertiefung (17) in einer dem kleineren Kettenrad (C) zugekehrten Seitenfläche des größeren Kettenrads (A) gebildet ist.

4. Kettenschaltung nach Anspruch 3,
dadurch gekennzeichnet,
daß die reliefartige Vertiefung (17) eine in normaler Umlaufrichtung (11) vorauslaufende in bezug auf die Achse (X) der Mehrkettenradeinheit (A-C) im wesentlichen radial verlaufende Vorlaufkante (17a) besitzt, wobei eine dieser Vorlaufkante (17a) in axialer Richtung benachbarte Kettenlasche (D2ig) jeweils über diese Vorlaufkante (17a) hinwegläuft.

5. Kettenschaltung nach Anspruch 4,
dadurch gekennzeichnet,
daß die reliefartige Vertiefung (17) in einem der normalen Umlaufrichtung (11) entsprechenden Vorlaufbereich vor einem Vorlaufende der Laschenauflagerampe (16) radial einwärts in Richtung auf die Achse (X) der Mehrkettenradeinheit (A-C) erweitert ist.

6. Kettenschaltung nach einem der Ansprüche 1-5,
dadurch gekennzeichnet,
daß der vorlaufende Erstzahn (A4) des Erstzähnepaars (A4,A5) des größeren Kettenrads (A) auf seiner von dem kleineren Kettenrad (C) abgelegenen Seitenfläche (22) nach radial auswärts und zum kleineren Kettenrad (C) hin abgeschrägt ist.

7. Kettenschaltung nach einem der Ansprüche 1-6,
dadurch gekennzeichnet,
daß zumindest ein Teil derjenigen Zähne (A1,A2,A5,A6) des größeren Kettenrads (A), aie nicht identisch sind mit dem vorlaufenden Erstzahn (A4) des Erstzähnepaars (A4,A5) des größeren Kettenrads (A) auf ihrer dem kleineren Kettenrad (C) zugekehrten Seite (27) nach radial außen und von dem kleineren Kettenrad (C) weg abgeschrägt sind, und zwar mindestens und vorzugsweise in einem radial äußeren Bereich (27) ihrer radialen Höhe.

8. Kettenschaltung nach einem dem Ansprüche 1-7,
dadurch gekennzeichnet,
daß an der Stelle (A3) des ausgesparten Zahns der Doppelzahnlücke (ZA) zumindest des größeren Kettenrads (A) ein Sporn (19) vorgesehen ist, welcher im Fall der axialen Nachbarschaft zu einem Innenlaschenpaar (D4i) außerhalb des Zwischenraums dieses Innenlaschenpaars (D4i) liegt, und zwar auf der Außenseite derjenigen Innenlasche (D4ig), welche dem kleineren Kettenrad (C) ferner ist, und welcher im Fall der axialen Nachbarschaft zu einem Außenlaschenpaar (D4a) in den Zwischenraum der Laschen dieses Außenlaschenpaars (D4a) hineinragt.

9. Kettenschaltung nach einem der Ansprüche 1 bis 8,
dadurch gekennzeichnet,
daß zur Erleichterung des Kettenumlegens in der Umlegerichtung vom größeren Kettenrad (A) zum kleineren Kettenrad (C) zusätzliche Gestaltungsmaßnahmen in dem für die Übergangsrichtung vom kleineren Kettenrad (C) zum größeren Kettenrad (A) ausgestalteten Kettenübergangumfangsbereich an Zähnen (A1,A2,A4,A5,A6) des größeren Kettenrads (A) vorgesehen sind.

10. Kettenschaltung nach Anspruch 9,
dadurch gekennzeichnet,
daß der nachlaufende Erstzahn (A5) des Erstzähnepaars (A4, A5) des größeren Kettenrads (A) oder/und der diesem nachlaufenden Erstzahn (A5) in normaler Umlaufrichtung (11) folgende Zahn (A6) des größeren Kettenrads (A) Abschrägungen (23) auf der jeweiligen dem Kleineren Kettenrad (C) zugekehrten Seite besitzen, und zwar so, daß die abgeschrägten Flächen (23) - bei einer Betrachtung in radialer Richtung von radial außen - im Sinne der normalen Umlaufrichtung (11) nach vorn und vom kleineren Kettenrad (C) weg verlaufen.

11. Kettenschaltung nach Anspruch 10,
dadurch gekennzeichnet,
daß beide Zähne, d.h. also sowohl der nachlaufende Erstzahn (A5) des größeren Kettenrads (A) als auch der diesem in normaler Umlaufrichtung 11 nachfolgende Zahn (A6) Abschrägungen (23) besitzen, wobei eine der Kettenumlegerichtung vom größeren Kettenrad (A) zum kleineren Kettenrad (C) entsprechende Kettenübergangsstrecke (B5-B9) bei axialer Nachbarschaft eines ihr zugehörigen Innenlaschenpaars (D6i) zu dem nachlaufenden Erstzahn (A5) des größeren Kettenrads (A) mit der Außenseite ihrer dem kleineren Kettenrad (C) fernen Innenlasche (D6ig) an der Abschrägung (23) des nachlaufenden Erstzahns (A5) des Erstzähnepaars (A4,A5) des größeren Kettenrads (A) anliegt, während im Falle der axialen Nachbarschaft eines Außenlaschenpaars (D7a) der Kettenübergangsstrecke (B5-B9) zum nachlaufenden Erstzahn (A5) des Erstzähnepaars (A4,A5) des größeren Kettenrads (A) dieser Erstzahn (A5) zwischen die Außenlaschen dieses Außenlaschenpaars (D7a) eingreift und dann eine dem kleineren Kettenrad (C) ferne Innenlasche (D8ig) eines dem zuvor genannten Außenlaschenpaar (D7a) nachfolgenden Innenlaschenpaars (D8i) an der Abschrägung (23) des auf den nachlaufenden Erstzahn (A5) des Erstzähnepaars (A4,A5) des größeren Kettenrads (A) nachfolgenden Zahns (A6) des größeren Kettenrads (A) anliegt.

12. Kettenschaltung nach einem der Ansprüche 1-11,
dadurch gekennzeichnet,
daß der erste (A2) und ggf. auch der zweite (A1) der der vergrößerten Zahnlücke des größeren Kettenrads (A) vorauslaufenden Zähne (A1,A2) im Sinne einer Anpassung an eine dort bereits einsetzende Schrägstellung der Kette (B) gegenüber ihrer Umlaufebene schräggestellt, axial versetzt oder nach radial außen abgeschrägt ist.

13. Kettenschaltung nach einem der Ansprüche 1-12,
dadurch gekennzeichnet,
daß die beiden Kettenräder, d.h. das größere Kettenrad (A) und das kleinere Kettenrad (C), Teil einer größeren Gruppe von Kettenrädern der Mehrkettenradeinheit (A-C) sind, wobei dann entweder das bisher als größeres Kettenrad betrachtete Kettenrad (A) das kleinere Kettenrad in bezug auf ein ihm benachbartes noch größeres Kettenrad ist und/oder das bisher als das kleinere Kettenrad betrachtete Kettenrad (C) das größere Kettenrad in bezug auf ein noch kleineres Kettenrad ist und wobei die in den vorstehenden Ansprüchen 1-12 angegebenen Beziehungen für mindestens einen Teil der jeweils zusammen ein Kettenradpaar bildenden benachbarten Kettenräder gelten.

14. Kettenschaltung nach einem der Ansprüche 1-13,
dadurch gekennzeichnet,
daß ein Sporn (19) jeweils nur im Bereich der Doppelzahnlücke des größten Kettenrads (A) oder der größten Kettenräder einer Mehrkettenradeinheit vorgesehen ist.

15. Kettenschaltung nach einem der Ansprüche 1-14,
dadurch gekennzeichnet,
daß einem Kettenradpaar (A,C) einer Mehrkettenradeinheit (A-C) eine Mehrzahl von über den Umfang verteilton Kettenübergangumfangsbereiche (T) zugeordnet sind.

16. Kettenschaltung, insbesondere für Fahrräder, umfassend eine treibende Kettenradeinheit und eine angetriebene Kettenradeinheit (A-C) sowie eine diese beiden Kettenradeinherten miteinander verbindende Kette (B),
wobei mindestens eine (A-C) der Kettenradeinheiten als Mehrkettenradeinheit (A-C) mit mindestens zwei Kettenrädern (A-C), nämlich einem größeren (A) und einem kleineren Kettenrad (C), ausgebildet ist,
wobei weiter die beiden Kettenräder (A,C) der Mehrkettenradeinheit (A-C) je eine Vielzahl von Zähnen (A1...;C1...) und eine entsprechende Vielzahl von zwischen jeweils einen Zahnpaar (A1,A2;C1,C2) gebildeten Zahnlücken (A1-A2;C1-C2) aufweist,
wobei weiter die Kette (B) von aufeinanderfolgenden Kettengelenken (B1...) und von inneren (D2i) und äußeren Laschenpaaren (D3a) in abwechselnder Reihenfolge zwischen den Kettengelenken (B1...) gebildet ist,
wobei weiter zum Umlegen der Kette zwischen den beiden Kettenrädern (A,C) der Mehrkettenradeinheit (A-C) eine Umlegeeinrichtung (10) in einem Einlaufbereich (15) vorgesehen ist, in welchem die Kette (B) bei normaler Umlaufrichtung (11) der Kette (B) und der Kettenräder (A,C) in die Mehrkettenradeinheit (A-C) einläuft und diese Umlegeeinrichtung (10) dazu ausgebildet ist, um der Kette (B) Bewegungen in einer zur Achse (X) der Mehrkettenradeinheit (A-C) parallelen Richtung zu erteilen,
wobei weiter beim Umlegen der Kette (B) zwischen den Kettenrädern (A,C) der Mehrkettenradeinheit (A-C) sich eine Kettenübergangsstrecke (B1-B5) zwischen einem altbesetzten (C) und einem neubesetzten (A) der beiden Kettenräder ausbildet, welche Kettenübergangsstrecke (B1-B5) den Umlaufbereich der Mehrkettenradeinheit (A-C) vom Ketteneinlaufbereich (15) bis zu einem Kettenablaufbereich (L) der Mehrkettenradeinheit (A-C) durchläuft,
wobei weiter die Kettenübergangsstrecke (B1-B5) sich entgegen der normalen Umlaufrichtung (11) der Mehrkettenradeinheit (A,C) erstreckt von einem Kettengelenk (B1), das als letztes Kettengelenk (B1) zwischen zwei Letztzähne (C1,C2) eines Letztzähnepaars (C1,C2) des altbesetzten Kettenrads (C) eingreift, zu einem Kettengelenk (B5), das als erstes zwischen zwei Erstzähne (A4,A5) eines Erstzähnepaars (A4,A5) des neubesetzten Kettenrads (A) eingreift
und wobei in mindestens einem der Kettenumlegung in der Umlegerichtung vom kleineren Kettenrad (C) zum größeren Kettenrad (A) entsprechenden Kettenübergangumfangsbereich (T) der Mehrkettenradeinheit (A-C) an den Kettenrädern (A,C) Gestaltungsmaßnahmen getroffen sind, um in diesem Kettenübergangumfangsbereich (T) das Umlegen der Kette (B) zwischen den beiden Kettenrädern (A,C) zumindest in der Umlegerichtung vom kleineren Kettenrad (C) zum größeren Kettenrad (A) zu erleichtern und den Verlauf der entsprechenden Kettenübergangsstrecke (B1-B5) festzulegen,
dadurch gekennzeichnet,
daß bei Aussparung mindestens eines Zahns (bei A3) zwischen zwei aufeinanderfolgenden Zähnen (A2,A4) eines Kettenrads (A) und dadurch veranlaßter Bildung einer Mehrfachzahnlücke, insbesondere Doppelzahnlücke (ZA) die Zahnlückenkontur dieser Mehrfachzahnlücke (ZA) und die Zahnlückenkontur einer auf diese Mehrfachzahnlücke (ZA) unmittelbar nachfolgenden weiteren Zahnlücke (A4-A5) derart aufeinander abgestimmt sind, daß bei Einliegen einer entsprechenden Zahl von Kettengelenken (B3-B5) in diesen Zahnlücken (ZA,A4-A5) deren Gelenkachsen auf einer gemeinsamen Verbindungsgeraden (V) liegen, wobei das in der Mehrfachzahnlücke (ZA) vorlaufende Kettengelenk (B3) und das in der nachfolgenden Zahnlücke (A4,A5) aufgenommene Kettengelenk (B5) mindestens beim Auslauf ins Zugtrum gemeinsam an der Nachlaufflanke des ihnen jeweils vorauslaufenden Zahns (A2 bzw.A4) anteilmäßig drehmomentübertragend anliegen.

17. Kettenschaltung nach Anspruch 16,
dadurch gekennzeichnet,
daß die Mittelpunkte der Zahnlücken des Kettenrads ein unregelmäßiges Polygon bilden, wobei die jeweils auf einer gemeinsamen Verbindungslinie (V) liegenden Gelenkachsen jeweils größere Polygonseiten (G-G-G) bilden.

## Claims

1. Derailleur gear, in particular for bicycles, comprising a driving sprocket unit and a driven sprocket unit (A-C) as well as a chain (B) connecting these two sprocket units together,
in which at least one (A-C) of the sprocket units is in the form of a multi-sprocket cluster (A-C) with at least two sprockets (A, C), namely a larger (A) and a smaller sprocket (C),
in which furthermore the two sprockets (A, C) of the multi-sprocket cluster (A-C) each have a number of teeth (A1...;C1...) and a corresponding number of tooth gaps (A1-A2; C1-C2) formed between respective pairs of teeth (A1,A2; C1,C2),
in which furthermore generally speaking the tooth gaps (A1-A2; C1-C2) are in the form of single tooth gaps for receiving respective pivots of the chain,
in which furthermore the chain (B) is made of successive pivots (B1...) and of pairs of inner (D2i) and outer (D3a) links in alternating sequence between the pivots (B1...),
in which furthermore for shifting the chain over between the two sprockets (A,C) of the multi-sprocket cluster (A-C) a shifting device (10) is provided in an entry region (15), in which the chain (B) enters the multi-sprocket cluster (A-C) in the normal direction of movement (11) of the chain (B) and sprockets (A,C) and this shifting device (10) is constructed so as to impart to the chain (B) movements in a direction parallel to the axis (X) of the multi-sprocket cluster (A-C),
in which furthermore on shifting of the chain between the sprockets (A,C) of the multi-sprocket cluster (A-C) a chain transition stretch (B1-B5) is formed between a previously occupied one (C) and a newly occupied one (A) of the two sprockets, which stretch (B1-B5) passes through the region of movement of the multi-sprocket cluster (A-C) from the chain entry region (15) up to a chain departure region (L) of the multi-sprocket cluster (A-C),
in which furthermore the chain transition stretch (B1-B5) extends opposite to the normal direction of movement (11) of the multi-sprocket cluster (A, C) from a pivot (B1) which is the last pivot (B1) to engage between two last teeth (C1, C2) of a last tooth pair (C1,C2) of the previously occupied sprocket (C), to a pivot (B5) which is the first to engage between two first teeth (A4, A5) of a first tooth pair (A4, A5) of the newly occupied sprocket (A)
and in which in at least one chain transfer circumferential region (T) of the multi-sprocket unit (A-C) corresponding to the shift of the chain in the shifting direction from the smaller sprocket (C) to the larger sprocket (A) shaping measures are undertaken on the sprockets (A, C) in order, in this chain transition circumferential region (T) to ease the transfer of the chain (B) between the two sprockets (A, C) at least in the shifting direction from the smaller sprocket (C) to the larger sprocket (A) and to determine the path of the corresponding chain transition stretch (B1-B5),
characterised by the following features:
a) in the chain transition circumferential region (T) corresponding to the transfer from the smaller sprocket (C) to the larger sprocket (A) on the larger sprocket (A) a tooth (at A3) is omitted to form a double tooth gap (ZA) arranged between single tooth gaps, this omitted tooth in the normal direction of rotation (11) preceding the leading first tooth (A4) of the first tooth pair (A4, A5) on the larger sprocket (A);
b) on the large sprocket (A) on that side face of it which faces towards the smaller sprocket (C) in the region of the root of a tooth (A2) which precedes the double tooth gap (ZA) in the normal direction of rotation (11) and if desired also in the leading end region of the double tooth gap (ZA) there is formed a link-engaging ramp (16) which, in the normal direction of rotation (11), follows the trailing last tooth (C2) of the last tooth pair (C1, C2) on the smaller sprocket (C);
c) by the link-engaging ramp (16) and a floor (ZA1) of the double tooth gap (ZA) there is forced a radially outwardly convexly curved or bent - looking axially - path (B1, B2, B3, B4, B5) of the chain transition stretch (B1-B5) within the chain transition circumferential region (T) between the first tooth pair (A4, A5) on the larger sprocket (A) and the last tooth pair (C1, C2) on the smaller sprocket (C), the curved chain transition stretch (B1-B5) opening into the tooth gaps (C1-C2) between the two last teeth (C1, C2) of the last tooth pair (C1, C2) on the smaller sprocket (C);
d) the leading first tooth (A4) of the first tooth pair (A4, A5) on the larger sprocket (A) in the normal direction of rotation (11) is shaped for engagement both between the links of a pair of inner links (D5i) and also between the links of a pair of outer links (D5a).

2. Derailleur gear according to claim 1,
characterised in that,
on the smaller sprocket (C) a tooth (at C3) following the trailing last tooth (C2) of the last tooth pair (C1, C2) is omitted to form a multi-tooth gap (ZC) on the smaller sprocket (C).

3. Derailleur gear according to one of claims 1 and 2,
characterised in that,
the link-engaging ramp (16) is formed by the radially inner edge of a relief-like recess (17) in a side face of the larger sprocket (A) which faces towards the smaller sprocket (C).

4. Derailleur gear according to claim 3,
characterised in that,
the relief-like recess (17) has a substantially radially extending leading edge (17a) which leads in the normal direction of rotation (11) in relation to the axis (X) of the multi-sprocket cluster (A-C), whereby a chain link (D2ig) adjacent to this leading edge (17a) in an axial direction passes respectively over this leading edge (17a).

5. Derailleur gear according to claim 4,
characterised in that,
the relief-like recess (17) is widened out radially inwards in the direction towards the axis (X) of the multi-sprocket cluster (A-C) in a leading region corresponding to the normal direction of rotation (11) ahead of a leading end of the link-engaging ramp (16).

6. Derailleur gear according to one of claims 1-5,
characterised in that,
the leading first tooth (A4) of the first tooth pair (A4, A5) on the larger sprocket (A) is chamfered radially outwards and towards the smaller sprocket (C) on its side face (22) which faces away from the smaller sprocket (C).

7. Derailleur gear according to one of claims 1-6,
characterised in that,
at least some of those teeth (A1, A2, A5, A6) on the larger sprocket (A) which are not identical with the leading first tooth (A4) of the first tooth pair (A4, A5) on the larger sprocket (A) are chamfered radially outwards and away from the smaller sprocket (C) on that side (27) which faces the smaller sprocket (C), and in fact at least and preferably in a radially outer region (27) of their radial height.

8. Derailleur gear according to one of claims 1-7,
characterised in that,
at the point (A3) where the tooth is missing in the double tooth gap (ZA) at least on the larger sprocket (A) there is provided a spur (19) which in the case of the axial proximity to a pair of inner links (D4i) lies outside the space between the links of this inner pair (D4i) and in fact on the outside of that inner link (D4ig) which is furthest from the smaller sprocket (C), and which in the case of the axial proximity to a pair of outer links (D4a) it penetrates into the gap between the links of this outer pair (D4a).

9. Derailleur gear according to one of claims 1 to 8,
characterised in that,
to ease the shifting of the chain in the transfer direction from the larger sprocket (A) to the smaller sprocket (C) additional shaping measures are provided on teeth (A1, A2, A4, A5, A6) on the larger sprocket (A) in the chain transition circumferential region designed for the direction of transfer from the smaller sprocket (C) to the larger sprocket (A).

10. Derailleur gear according to claim 9,
characterised in that,
the trailing first tooth (A5) of the first tooth pair (A4, A5) on the larger sprocket (A) and/or the tooth (A6) on the larger sprocket (A) which follows this trailing first tooth (A5) in the normal direction of rotation (11) have chamfers (23) on that side which faces towards the smaller sprocket (C), and in fact in such a way that the chamfered faces (23) - looking radially from outside - extend away forwards and away from the smaller sprocket (C) in the sense of the normal direction of rotation (11).

11. Derailleur gear according to claim 10,
characterised in that,
the two teeth, i.e. therefore both the trailing first tooth (A5) on the larger sprocket (A) and also the tooth (A6) which follows this in the normal direction of rotation (11) have chamfers (23), whereby a chain transition stretch (B5-B9) corresponding to the direction of transfer of the chain from the larger sprocket (A) to the smaller sprocket (C) on axial proximity of a pair of inner links (D6i) associated with it to the trailing first tooth (A5) on the larger sprocket (A) engages with the outside of its inner link (D6ig) furthest from the smaller sprocket (C) against the chamfer (23) on the trailing first tooth (A5) of the first tooth pair (A4, A5) on the larger sprocket (A), whereas in the event of the axial proximity of a pair of outer links (D7a) of the chain transition stretch (B5-B9) to the trailing first tooth (A5) of the first tooth pair (A4, A5) on the larger sprocket (A) this first tooth (A5) engages between the outer links of this pair of outer links (D7a) and then an inner link (D8ig) furthest from the smaller sprocket (C) of a pair of inner links (D8i) which follows the previously mentioned pair of outer links (D7a) engages against the chamfer (23) of the tooth (A6) on the larger sprocket (A) which follows the trailing first tooth (A5) of the first tooth pair (A4, A5) on the larger sprocket (A).

12. Derailleur gear according to one of claims 1-11,
characterised in that,
the first (A2) and possibly also the second (A1) of the teeth (A1, A2) which precedes the enlarged tooth gap on the larger sprocket (A) is set inclined, axially offset or radially outwardly chamfered in relation to its plane of movement in the sense of matching to an inclined position of the chain (B) which is already adopted there.

13. Derailleur gear according to one of claims 1-12,
characterised in that,
the two sprockets, i.e. the larger sprocket (A) and the smaller sprocket (C), are part of a larger group of sprockets of the multi-sprocket cluster (A-C), in which case either the sprocket (A) hitherto regarded as the larger sprocket is the smaller sprocket in relation to a still larger sprocket adjacent to it and/or the sprocket (C) hitherto regard as the smaller sprocket is the larger sprocket in relation to a still smaller sprocket and in which the relationships stated in the foregoing claims 1-12 apply to at least some of the respective adjacent sprockets forming together a sprocket pair.

14. Derailleur gear according to one of claims 1-13,
characterised in that,
a spur (19) is provided respectively only in the region of the double tooth gap of the largest sprocket (A) or the largest sprocket of a multi-sprocket cluster.

15. Derailleur gear according to one of claims 1-14,
characterised in that,
a sprocket pair (A, C) of a multi-sprocket unit (A-C) has associated with it a number of circumferentially spaced chain transition circumferential regions (T).

16. Derailleur gear, in particular for bicycles, comprising a driving sprocket unit and a driven sprocket unit (A-C) as well as a chain (B) connecting these two sprocket units together,
in which at least one (A-C) of the sprocket units is in the form of a multi-sprocket cluster (A-C) with at least two sprockets (A-C), namely a larger (A) and a smaller sprocket (C),
in which furthermore the two sprockets (A,C) of the multi-sprocket cluster (A-C) each have a number of teeth (A1...; C1...) and a corresponding number of tooth gaps (A1-A2; C1-C2) formed between respective pairs of teeth (A1, A2; C1-C2),
in which furthermore the chain (B) is formed of successive pivots (B1...) and of pairs of inner (D2i) and outer links (D3a) in alternating sequence between the pivots (B1...),
in which furthermore to transfer the chain between the two sprockets (A, C) of the multi-sprocket cluster (A-C) there is provided a shifting device (10) in an entry region (15), in which the chain (B) in the normal direction of rotation (11) of the chain (B) enters the sprockets (A, C) in the multi-sprocket cluster (A,C) and this direction of shift (10) is made such as to impart to the chain (B) movements in a direction parallel to the axis (X) of the multi-sprocket cluster (A-C),
and in which furthermore for shifting the chain (B) between the sprockets (A, C) of the multi-sprocket cluster (A-C) there is formed a chain transition stretch (B1-B5) between a previously occupied one (C) and a newly occupied one (A) of the two sprockets, which chain transition stretch (B1-B5) passes through the transfer region of the multi-sprocket cluster (A-C) from the chain entry region (15) to a chain departure region (L) from the multi-sprocket cluster (A-C),
in which furthermore the chain transition stretch (B1-B5) extends opposite to the normal direction of rotation (11) of the multi-sprocket cluster (A-C) from a chain pivot (B1), which is the last pivot (B1) to engage between two last teeth (C1) of a last tooth pair (C1, C2) on the previously occupied sprocket (C), to a chain pivot (B5) which is the first to engage between two first teeth (A4, A5) of a first tooth pair (A4, A5) on the newly occupied sprocket (A)
and in which in at least one chain transition circumferential region (T) of the multi-sprocket cluster (A-C) corresponding to the transfer of the chain in the shifting direction from the smaller sprocket (C) to the larger sprocket (A) shaping measures are undertaken on the sprockets (A, C) in order to ease in this chain transition circumferential region (T) the shifting of the chain (B) between the two sprockets (A,C) at least in the direction from the smaller sprocket (C) to the larger sprocket (A), and to determine the path of the corresponding chain transition stretch (B1-B5),
characterised in that,
with the omission of at least one tooth (at A3) between two successive teeth (A2, A4) on a sprocket (A) and the resulting formation of a multi-tooth gap, in particular a double tooth gap (ZA), the tooth gap profile of this multi-tooth gap (ZA) and the tooth gap profile of a further tooth gap (A4 - A5) immediately following this multi-tooth gap (ZA) are matched to one another in such a way that on the introduction of a corresponding number of chain pivots (B3-B5) into these tooth gaps (ZA, A4 -A5) of which the pivot axes lie on a common connecting straight line (V), whereby the leading chain pivot (B3) in the multi-tooth gap (ZA) and the chain pivot (B5) received in the next following tooth gap (A4, A5) engage to share in the transmission of the torque at least on the departure into the tension run in common on the trailing flanks of the respective associated teeth (A2) and (A4).

17. Derailleur gear according to claim 16,
characterised in that,
the mid points of the tooth gaps on the sprocket form an irregular polygon, the pivot axes lying on a common connecting line (V) forming the respective larger sides (G-G-G) of the polygon.

## Revendications

1. Changement de vitesse à dérailleur de chaîne, notamment pour des bicyclettes, comprenant une unité motrice à roue à chaîne et une unité à roues à chaîne entraînée (A-C) ainsi qu'une chaîne (B) reliant ces deux unités à la roue à chaîne (B),
où au moins l'une des unités de roues à chaîne (A-C) est constituée d'une unité de plusieurs roues à chaîne (A-C) avec au moins deux roues à chaîne (A-C), à savoir une plus grande (A) et une plus petite roue (C), où les deux roues à chaîne (A-C) de l'unité à plusieurs roues à chaîne (A-C), présentent respectivement une pluralité de dents (A1...,C1...) et une pluralité correspondante d'interdents (A1, A2 ; C1-C2) formées respectivement entre une paire de dents (A1, A2 ; C1, C2),
ou aussi en général les interdents (A1, A2 ; C1, C2) sont en forme d'interdents simples pour recevoir respectivement une articulation de chaîne, où aussi la chaîne (B) est constituée d'articulations de chaîne successives (B1...) et de paires de maillons intérieurs (D2i) et extérieures (D3a) en succession alternée entre les articulations de chaîne (B1...),
où aussi pour déplacer la chaîne entre les deux roues à chaîne de l'unité à plusieurs roues à chaîne (A, C) on prévoit un dispositif de déplacement (10) dans une zone d'entrée (15), où la chaîne (B) s'engage dans le sens normal de circulation de la chaîne (B) et des roues à chaîne (A, C), dans l'unité à plusieurs roues à chaîne (A, C) et ce dispositif de déplacement (10) est constitué pour obtenir des déplacements de la chaîne (B) dans un sens parallèle de l'axe (X) de l'unité à plusieurs roues à chaîne,
où aussi quand on déplace la chaîne (B) entre les roues à chaîne (A, C) de l'unité à plusieurs roues à chaîne (A, C) il se forme un parcours de transition de chaîne (B1-B5) entre l'une des deux roues à chaîne anciennement occupée (C) et une roue nouvellement occupée, ce parcours de transition de chaîne (B1-B5) suit le domaine de circulation de l'unité à plusieurs roues à chaîne (A, C) depuis la zone d'entrée (15) jusqu'à une zone de dégagement de chaîne de l'unité à plusieurs roues à chaîne (A-C),
où aussi le parcours de transition de chaîne (B1-B5) s'étend en sens inverse du sens normal de circulation (11) de l'unité à plusieurs roues à chaîne (A, C) depuis une articulation de chaîne (B1) qui est en prise comme dernière articulation de chaîne (B1) entre deux dernières dents (C1, C2) d'une dernière paire de dents (C1, C2) de la roue à chaîne anciennement occupée (C), jusqu'à une articulation de chaîne (B5) qui est la première à venir en prise entre deux premières dents (A4, A5) d'une paire de premières dents (A4, A5) de la roue à chaîne nouvellement occupée (A), et où dans au moins une zone de transition de chaîne correspondante au déplacement de chaîne dans le sens de déplacement de la plus petite roue (C) vers la plus grande roue (A) de l'unité à plusieurs roues (A, C) sur les roues à chaîne (A, C) on prend des dispositions de conformation pour faciliter dans cette zone de transition (T) le déplacement de la chaîne (B) entre les deux roues à chaîne (A, C) au moins dans le sens de déplacement de la plus petite roue (C) vers la grande roue (A) et établir le bon déroulement du parcours de transition de chaîne (B1-B5),
caractérisé par les caractéristiques suivantes :
a) dans la zone de transition de chaîne correspondant au déplacement de la chaîne de la plus petite roue à chaîne (C) vers la plus grande roue (A), on élimine sur la plus grande roue (A) en formant un interdent double (ZA) placé entre des interdents simples, une dent (A3) qui se trouve dans le sens de circulation normal (11) en avant de la première dent en amont (A4) de la paire de premières dents (A4, A5) de la grande roue à chaîne (A) ;
b) sur la grande roue (A), sur la face latérale tournée vers la plus petite roue (C) dans la zone de base d'une dent (A2), qui précède dans le sens de circulation normal (11) l'interdent double (ZA) et qui, si c'est souhaité forme une rampe de support de maillons (16) dans la zone terminale en amont de l'interdent double (ZA) qui dans le sens de circulation normal (11) succède à la dernière dent en aval (C2) de la paire de dernières dents (C1, C2) de la plus petite roue à chaîne (C) ;
c) grâce à la rampe de support de maillons (16) et à un fond (ZA1)de l'interdent double (ZA) on oblige à réaliser un parcours incurvé ou fléchi (B1, B2, B3, B4, B5), vu en sens axial, convexe radial vers l'extérieur, à la distance de transition de chaîne (B1-B5) à l'intérieur de la zone de transition de chaîne (T) entre la paire de premières dents (A4, A5) de la grande roue à chaîne (A) et la paire de dernières dents (C1, C2) de la plus petite roue à chaîne (C), où la distance de transition de chaîne incurvée (B1-B5) débouche dans l'entredent (C1, C2) entre les deux dernières dents (C1, C2) de la paire de dernières dents (C1, C2) de la plus petite roue à chaîne ;
d) la première dent (A4) en amont dans le sens normal de circulation (11) de la paire de premières dents (A4, A5) de la plus grande roue à chaîne (A) est constituée pour permettre la prise aussi bien entre les maillons d'une paire de maillons intérieurs (D5i) ainsi qu'entre les maillons d'une paire de maillons extérieurs (D5a).

2. Changement de vitesse à déraillement de chaîne,
caractérisé en ce qu'
on élimine sur la petite roue à chaîne (C) une dent (en C3) suivant la dernière dent (C2) en aval de la paire de dernières dents (C1, C2) en formant un entredent multiple (ZC) de la plus petite roue à chaîne (C).

3. Changement de vitesse à déraillement de chaîne selon l'une des revendications 1 et 2,
caractérisé en ce qu'
on constitue la rampe de support de maillon (16) du bord intérieur radial d'une cavité (147) en forme de relief dans une face latérale, tournée vers la plus petite roue à chaîne (C) de la plus grande roue à chaîne (A).

4. Changement de vitesse à déraillement de chaîne selon la revendication 3,
caractérisé en ce que
la cavité en forme de relief (17) possède un bord en amont (17a) s'étendant essentiellement radialement en amont dans le sens de circulation normal (11) par rapport à l'axe (X) de l'unité à plusieurs roues à chaîne (A-C) où un maillon de chaîne voisine en sens axial de ce bord en amont (17a) passe respectivement sur ce bord en amont (17a).

5. Changement de vitesse à déraillement de chaîne selon la revendication 4,
caractérisé en ce que
la cavité en forme de relief (17) s'élargit radialement vers l'intérieur dans le sens de l'axe (X) de l'unité à plusieurs roues (A-C) dans une zone amont correspondant à la circulation normale (11) avant une extrémité en amont de la rampe de support des maillons (16).

6. Changement de vitesse à déraillement de chaîne selon les revendications 1-5,
caractérisé en ce que
la première dent (A4) en amont de la paire de premières dents (A4, A5) de la plus grande roue à chaîne (A) est biseautée sur sa face latérale (22) opposée à la petite roue à chaîne radialement vers l'extérieur et vers la plus petite roue à chaîne (C).

7. Changement de vitesse selon l'une des revendications 1-6,
caractérisé en ce qu'
au moins une partie des dents (A1, A2, A5, A6) de la plus grande roue à chaîne qui ne sont pas identiques à la première dent en amont (A4) de la paire de premières dents (A4, A5) de la plus grande roue (A) sont biseautées sur leur côté (27) dirigé vers la plus petite roue (C) radialement vers l'extérieur et à l'opposé de la plus petite roue (C), et cela au moins et de préférence dans une zone radiale extérieure (27) de leur hauteur radiale.

8. Changement de vitesse à dérailleur de chaîne selon l'une des revendications 1-7,
caractérisé en ce qu'
à l'endroit (A3) de la dent éliminée de l'entredent double (ZA) d'au moins la plus grande roue à chaîne (A) on prévoit un éperon (19) qui dans le cas du voisinage axial avec une paire de maillons internes (D4i) repose en dehors de l'espace intermédiaire de cette paire de maillons intérieurs (D4i) et certes sur la face extérieure du maillon intérieur (D4ig), qui est plus éloigné de la plus petite roue à chaîne (C), et qui dans le cas du voisinage axial avec une paire de maillons extérieurs (D4a) pénètre dans l'espace intermédiaire des maillons de cette paire de maillons extérieures (D4a).

9. Changement de vitesse à dérailleur de chaîne selon l'une des revendications 1 à 8,
caractérisé en ce que
pour faciliter le déplacement de la chaîne dans le sens de transition de la plus grande roue à chaîne (A) vers la plus petite roue à chaîne (C), on prévoit des dispositions de conformation dans la zone périphérique de transition de chaîne constituée pour le sens de transition de la plus petite roue à chaîne (C) vers la plus grande roue à chaîne (A) au niveau des dents (A1, A2, A4, A5, A6) de la plus grande roue à chaîne (A).

10. Changement de vitesse selon la revendication 9,
caractérisé en ce que
la première dent en aval (A5) de la paire de premières dents (A4, A5) de la plus grande roue (A) et/ou la dent (A6) suivant cette première dent en aval (A5) dans le sens normal de circulation (11) de la plus grande roue à chaîne (A) possèdent des biseautages (23) sur le côté dirigé vers chaque plus petite roue (C) respective, et cela de sorte que les faces biseautées (23), quand on observe en sens radial depuis l'extérieur radialement s'étendent dans le sens normal de circulation (11) vers l'avant et à l'opposé de la plus petite roue à chaîne (C).

11. Changement de vitesse à dérailleur de chaîne selon la revendication 10,
caractérisé en ce que
les deux dents, c'est-à-dire aussi bien la première dent en aval (A5) de la plus grande roue à chaîne (A) qu'aussi la dent (A6) suivant celle-ci dans le sens normal de circulation (11) possèdent des biseautages (23) où une distance de transition de chaîne (B5-B9) correspondant au sens de déplacement de chaîne de la plus grande roue à chaîne (A) vers la plus petite roue à chaîne (C) lors du voisinage axial d'une paire de maillons intérieurs (D6i) en faisant partie avec la première dent en aval (A5) de la plus grande roue à chaîne (A) repose avec la face extérieure de la plaque intérieure (D6ig) opposée à la plus petite roue à chaîne (C) sur le biseautage (23) de la première dent (A5) en aval de la paire de premières dents (A4, A5) de la plus grande roue à chaîne, tandis que dans le cas du voisinage axial d'une paire de maillons externes (D7a) de la distance de transition de chaîne (B5-B9) avec la première dent (A5) en aval de la paire de premières dents (A4, A5) de la plus grande roue à chaîne (A) cette première dent (A5) vient en prise entre les maillons extérieurs de cette paire de maillons extérieurs (D7a) et ensuite une maillon intérieur (D8ig) éloigné de la plus petite roue à chaîne (C) d'une paire de maillons intérieurs (D8i) suivant la paire de maillons extérieurs (D7a) déjà citée s'appuie sur le biseautage (23) de la dent (A6) suivant la première dent en aval (A5) de la paire de premières dents (A4, A5) de la plus grande roue à chaîne (A).

12. Changement de vitesse à dérailleur de chaîne selon l'une des revendications 1-11,
caractérisé en ce que
la première dent (A2) et le cas échéant la deuxième dent (A1) des dents en amont (A1, A2) de l'entredent agrandi de la plus grande roue à chaîne (A) dans le sens d'une adaptation à une position en biais de la chaîne (B) déjà installée, est placée en biais par rapport à son plan de circulation, est décalée axialement ou biseautée radialement vers l'extérieur.

13. Changement de vitesse à dérailleur de chaîne selon l'une des revendications 1-12,
caractérisé en ce que
les deux roues à chaîne, c'est-à-dire la plus grande roue à chaîne (A) et la plus petite roue à chaîne (C) font partie d'un plus grand groupe de roues à chaîne de l'unité à plusieurs roues à chaîne de l'unité à plusieurs roues à chaîne (A-C) où alors soit la roue (A) considérée jusqu'ici comme étant la plus grande roue est la plus petite roue à chaîne par rapport à une roue à chaîne voisine encore plus grande et/ou la roue (C) considérée comme la roue la plus petite par rapport à une roue encore plus petite est une plus grande roue et où les relations indiquées aux revendications précédentes 1-12 sont valables pour au moins une partie des roues à chaîne voisines formant respectivement une paire de roues.

14. Changement de vitesse à dérailleur de chaîne selon l'une des revendications 1-13,
caractérisé en ce qu'
on ne prévoit qu'un éperon (19) respectivement dans le domaine de l'entredent double de la plus grande roue à chaîne (A) ou des plus grandes roues à chaîne d'une unité à plusieurs roues à chaîne.

15. Changement de vitesse selon l'une des revendications 1-14,
caractérisé en ce qu'
à une paire de roues à chaîne (A-C) d'une unité à plusieurs roues à chaîne correspond une pluralité de zones de transition de chaîne (T) réparties à la périphérie.

16. Changement de vitesse à dérailleur de chaîne, notamment pour des bicyclettes, comprenant une unité motrice à roue à chaîne et une unité à roues à chaîne entraînée (A-C) ainsi qu'une chaîne (B) reliant ces deux unités à la roue à chaîne (B),
où au moins l'une des unités de roues à chaîne (A-C) est constituée d'une unité de plusieurs roues à chaîne (A-C) avec au moins deux roues à chaîne (A-C), à savoir une plus grande (A) et une plus petite roue à chaîne (C), où les deux roues à chaîne (A-C), de l'unité à plusieurs roues à chaîne (A-C), présentent respectivement une pluralité de dents (A1...,C1...) et une pluralité correspondante d'interdents (A1, A2 ; C1-C2) formées respectivement entre une paire de dents (A1, A2 ; C1, C2),
où aussi la chaîne (B) est constituée d'articulations de chaîne successives (B1...) et de paires de maillons intérieurs (D2i) et extérieurs (D3a) en succession alternée entre es articulations de chaîne (B1...),
où aussi pour déplacer la chaîne entre les deux roues à chaîne de l'unité à plusieurs roues à chaîne (A, C) on prévoit un dispositif de déplacement (10) dans une zone d'entrée (15), où la chaîne (B) s'engage dans le sens normal de circulation de la chaîne (B) et des roues à chaîne (A, C), dans l'unité à plusieurs roues à chaîne (A, C) et ce dispositif de déplacement (10) est constitué pour obtenir des déplacements de la chaîne (B) dans un sens parallèle de l'axe (X) de l'unité à plusieurs roues à chaîne,
où aussi quand on déplace la chaîne (B) entre les roues à chaîne (A, C) de l'unité à plusieurs roues à chaîne (A, C) il se forme un parcours de transition de chaîne (B1-B5) entre l'une des deux roues à chaîne anciennement occupée (C) et une roue nouvellement occupée, ce parcours de transition de chaîne (B1-B5) suit la zone de circulation de l'unité à plusieurs roues à chaîne (A, C) depuis la zone d'entrée (15) jusqu'à une zone de dégagement de chaîne de l'unité à plusieurs roues à chaîne (A-C),
où aussi le parcours de transition de chaîne (B1-B5) s'étend en sens inverse du sens normal de circulation (11) de l'unité à plusieurs roues à chaîne (A, C) depuis une articulation de chaîne (B1) qui est en prise comme dernière articulation de chaîne (B1) entre deux dernières dents (C1, C 2) d'une dernière paire de dents (C1, C2) de la roue à chaîne anciennement occupée (C), jusqu' à une articulation de chaîne (B5) qui est la première à venir en prise entre deux premières dents (A4, A5) d'une paire de premières dents (A4, A5) de la roue à chaîne nouvellement occupée (A), et où dans au moins une zone de transition de chaîne correspondante au déplacement de chaîne dans le sens de déplacement de la plus petite roue (C) vers la plus grande roue (A) de l'unité à plusieurs roues (A, C) sur les roues à chaîne (A, C) on prend des dispositions de conformation pour faciliter dans cette zone de transition (T) le déplacement de la chaîne (B) entre les deux roues à chaîne (A, C) au moins dans le sens de déplacement de la plus petite roue (C) vers la grande roue (A) et établir le bon déroulement du parcours de transition de chaîne (B1-B5),
caractérisé en ce que
lors de l'élimination d'au moins une dent (en A3) entre deux dents successives (A2, A4) d'une roue à chaîne (A) et la formation ainsi occasionnée d'un entredent multiple, notamment un entredent double (ZA) le contour d'entredent de cet entredent multiple (ZA) et le contour d'interdent d'un autre interdent (A4-A5) successif directement de cet entredent multiple (ZA) sont adaptés l'un à l'autre de telle sorte que lors de l'insertion d'un nombre correspondant d'articulations de chaîne (B3-B5) dans ces interdents (ZA, A4, A5), dont les axes d'articulation se trouvent sur une droite de liaison commune (V), où l'articulation en amont (B3) dans l'entredent multiple (ZA) et l'articulation (B5) logée dans l'entredent suivant (B5) reposent de façon à transmettre le couple de rotation au moins partiellement par passage lors de la traction ensemble sur le flanc aval de chaque dent en amont (A2 ou A4).

17. Changement de vitesse à dérailleur à chaîne selon la revendication 16,
caractérisé en ce que
les points médians des entredents de la roue à chaîne forment un polygone irrégulier où les axes d'articulation reposant respectivement sur une ligne de liaison commune (V) forment respectivement les plus grands côté du polygone.
